# FASCICULE DE BREVET EUROPEEN

(11) **EP 3 008 533 B1**
(45) Date de publication et mention de la délivrance du brevet: **17.02.2021**
(21) Numéro de dépôt: 14738551.2
(22) Date de dépôt: 10.06.2014
(51) Int. Cl.: G05D 1/00, B64C 13/50

(54) **SYSTÈME DE COMMANDE DE VOL ÉLECTRIQUE POUR AÉRONEF**
FLY-BY-WIRE-SYSTEM FÜR EIN FLUGZEUG
FLY-BY-WIRE SYSTEM FOR AN AIRCRAFT

(30) Priorité: 12.06.2013 FR 1355455
(43) Date de publication de la demande: 20.04.2016
(73) Titulaire: Safran Electronics & Defense, 75015 Paris (FR); Airbus Helicopters, 13725 Marignane Cedex (FR)
(72) Inventeur: BARA, Cédric, F-92100 Boulogne-Billancourt (FR); TUZI, Christophe, F-92100 Boulogne-Billancourt (FR); BOURGOGNE, Eric, F-92100 Boulogne-Billancourt (FR); COPPEE, Pascal, F-92100 Boulogne-Billancourt (FR); VANDENBAVIERE, Yann, F-92100 Boulogne-Billancourt (FR)
(74) Mandataire: Plasseraud IP
(86) Numéro de dépôt international: PCT/FR2014/051399
(87) Numéro de publication internationale: WO 2014/199070

(56) Documents cités:
- US-A1- 2005 085 957
- US-A1- 2005 085 957
- US-A1- 2006 100 750
- US-A1- 2006 100 750
- US-B1- 7 877 627
- US-B1- 7 877 627

## Description

L'invention concerne un système de commande de vol électrique pour aéronef. Les systèmes de commandes de vol électrique sont progressivement implémentés dans de plus en plus d'avions. Les premiers systèmes de commande de vol électrique étaient doublés par un système de commandes manuelles de secours à tringlerie permettant un atterrissage manuel en cas de panne du système de commande de vol électrique. Mais, ce système de commandes manuelles est encombrant et lourd de sorte que les constructeurs conçoivent aujourd'hui des aéronefs qui ne comportent plus de tel système de commandes manuelles de secours.

Dans ce contexte, il est essentiel que les systèmes de commande de vol électrique présentent un niveau de sécurité élevé. Pour garantir ce niveau de sécurité, des processeurs redondants sont implémentés et les liaisons de communication sont doublées.

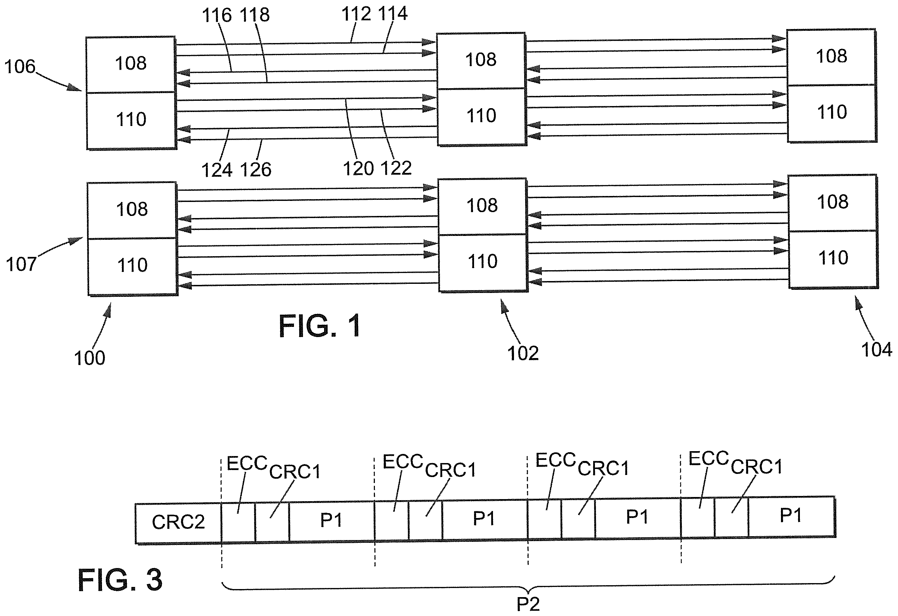

Par exemple, un système de commande de vol électrique connu a été représenté sur figure 1. Il comprend une commande de pilotage 100 apte à déterminer les positions du manche de direction, un calcul de position de gouvernes 102 capable de déterminer les positions des gouvernes aérodynamiques en fonction des positions du manche et une commande d'actionneurs 104 propre à calculer des commandes d'entraînement des actionneurs des gouvernes aérodynamiques à partir des positions des gouvernes aérodynamiques.

Pour palier à un éventuel dysfonctionnement d'un processeur de calcul, la commande de pilotage 100, le calcul de position des gouvernes 102 et la commande d'actionneurs 104 comprennent chacun deux étages 106, 107. Chaque étage 106, 107 est constitué d'un processeur principal, appelé processeur de commande 108, et d'un processeur secondaire, appelé processeur de surveillance 110, apte à vérifier la fiabilité des calculs réalisés par le processeur de commande 108. En cas de défaut de l'un des processeurs de commande 108 du premier étage 106 de la commande de pilotage 100, du calcul de position des gouvernes 102 ou de la commande d'actionneurs 104, les processeur de commande 108 et les processeurs de surveillance 110 du premier étage 106 se mettent en défaut et l'ensemble des calculs sont réalisés par les processeurs de commande 108 et les processeurs de surveillance 110 du deuxième étage 107.

Pour assurer l'intégrité des informations transmises entre les processeurs, les processeurs sont connectés entre eux par des liaisons de communication unidirectionnelles ou liaisons simplex. De plus, chacune de ces liaisons de communication est dédoublée afin de pouvoir vérifier que les données n'ont pas été tronquées ou modifiées au cours de leur transmission.

Ainsi, le processeur de commande 108 du premier étage 106 de la commande de pilotage 100 est connecté au processeur de commande 108 du premier étage 106 du calcul de position des gouvernes 102 par quatre liaisons de communication unidirectionnelle 112, 114, 116, 118 : deux d'entre elles permettent le transfert des données, dans une direction, du processeur de commande 108 de la commande de pilotage 100 vers le processeur de commande 108 du calcul de trajectoire 102, les deux autres permettent le transfert des données, dans la direction inverse, du processeur de commande 108 du calcul de trajectoire 102 vers le processeur de commande 108 de la commande de pilotage 100.

De la même façon et pour les mêmes raisons, le processeur de surveillance 110 du premier étage 106 de la commande de pilotage 100 est connecté au processeur de surveillance 110 du premier étage 106 du calcul de trajectoires 102 par quatre liaisons de communication 120, 122, 124, 126.

Ce réseau de câblages est répété entre d'une part le processeur de commande 108 et le processeur de surveillance 110 du deuxième étage 107 de la commande de pilotage et d'autre part, les processeurs de commande 108 et les processeurs de surveillance 110 du deuxième étage 107 du calcul de position des gouvernes ainsi que entre les processeurs de commande 108 et les processeurs de surveillance 110 du premier 106 et du deuxième étages 107 du calcul de position des gouvernes et les processeurs de commande 108 et les processeurs de surveillance 110 du premier 106 et du deuxième étages 107 de la commande d'actionneurs.

Un système de commande de vol électrique de ce type est décrit par exemple dans les documents US 2006/100750, US 7,877,627.

Un tel système de commande de vol électrique présente une masse et un volume importants.

Le document US 2005/085957 décrit un système multicanal asynchrone pour système de commande de vol électrique.

Un but de la présente invention est de concevoir un système de commande de vol électrique plus sécurisé qui présente en outre une masse et un volume inférieurs. En particulier, il serait souhaitable de concevoir un système de commande présentant un taux d'intégrité d'au moins 10⁻¹⁰ et un taux de disponibilité d'au moins 10⁻¹⁰.

A cet effet, l'invention a pour objet un système de commande de vol électrique pour aéronef comportant des gouvernes aérodynamiques et un manche pour piloter lesdites gouvernes aérodynamiques ; ledit système de commande comportant :
- une commande de pilotage comportant un premier étage et un deuxième étage comprenant chacun :
   - un calculateur de commande propre à déterminer les positions du manche, ledit calculateur de commande comporte une unité d'encodage propre à générer des positions du manche encodées, et
   - un calculateur de surveillance apte à vérifier l'intégrité des positions du manche déterminées par le calculateur de commande ;
- un calcul de position des gouvernes comportant un premier étage et un deuxième étage comprenant chacun :
   - un calculateur de commande propre à calculer des positions des gouvernes là partir des positions du manche encodées, et
   - un calculateur de surveillance apte à vérifier l'intégrité des positions des gouvernes calculées par le calculateur de commande ;
- une liaison unidirectionnelle de commandes de pilotage, dite première liaison principale de pilotage, connectant le calculateur de commande du premier étage de la commande de pilotage au calculateur de commande du premier étage du calcul de position des gouvernes ;
- une liaison unidirectionnelle de commandes de pilotage, dite deuxième liaison principale de pilotage, connectant le calculateur de commande du deuxième étage de la commande de pilotage au calculateur de commande du deuxième étage du calcul de positions des gouvernes ;
   caractérisé en ce que la commande de pilotage comporte un troisième étage comprenant :
   - un calculateur de commande propre à déterminer les positions du manche et, ledit calculateur de commande comporte une unité d'encodage propre à générer des positions du manche encodées,
   - un calculateur de surveillance apte à vérifier l'intégrité des positions du manche déterminées par le calculateur de commande ;
et en ce que le calcul de position des gouvernes comporte un troisième étage comprenant:
- un calculateur de commande propre à calculer des positions des gouvernes à partir des positions du manche encodées, et
- un calculateur de surveillance apte à vérifier l'intégrité des positions de gouvernes calculées par le calculateur de commande ;
et en ce que le système de commande comporte une liaison unidirectionnelle de commandes de pilotage, dite troisième liaison principale de pilotage, connectant le calculateur de commande du troisième étage de la commande de pilotage au calculateur de commande du troisième étage du calcul de position des gouvernes ;
et en ce que la première liaison principale de pilotage est l'unique liaison de commandes propre à transmettre les positions du manche encodées du calculateur de commande du premier étage de la commande de pilotage au calculateur de commande du premier étage du calcul de position des gouvernes ;
la deuxième liaison principale de pilotage étant l'unique liaison de commandes propre à transmettre les positions du manche encodées du calculateur de commande du deuxième étage de la commande de pilotage au calculateur de commande du deuxième étage du calcul de position des gouvernes ;
la troisième liaison principale de pilotage étant l'unique liaison de commandes propre à transmettre les positions du manche encodées du calculateur de commande du troisième étage de la commande de pilotage au calculateur de commande du troisième étage du calcul de position des gouvernes ;
le calculateur de surveillance du premier étage, le calculateurs de surveillance du deuxième étage et le calculateur de surveillance du troisième étage du calcul de position des gouvernes étant connectés à ladite première, deuxième et respectivement troisième liaisons principales de pilotage, par l'intermédiaire de liaisons de commandes ;
et dans lequel les calculateurs de surveillance de la commande de pilotage comportent chacun une unité d'encodage propre à décoder les positions du manche encodées ; les calculateurs de surveillance du premier étage, du deuxième étage et du troisième étage de la commande de pilotage étant connectées à ladite première, deuxième et respectivement troisième liaisons principales de pilotage par l'intermédiaire de liaisons de commandes ; les calculateurs de surveillance de la commande de pilotage étant propres à vérifier l'intégrité des positions du manche décodées par lesdites unités d'encodage.

Avantageusement, un tel système de commande de vol électrique présente un taux d'intégrité d'au moins 10⁻¹⁰ et un taux de disponibilité d'au moins 10⁻¹⁰ de sorte qu'il n'a pas besoin d'être doublé par un système de commandes manuelles.

De plus, l'utilisation de seulement quatre liaisons principales unidirectionnelles entre le calculateur de commande et le calculateur de surveillance du premier étage de la commande de pilotage et le calculateur de commande et le calculateur de surveillance du premier étage du calcul de position des gouvernes, au lieu de huit liaisons de communication selon l'état de la technique, permet de diminuer considérablement le volume et la masse du système de commande de vol électrique. La diminution du nombre de liaisons de communication permet également de réduire le coût du système de commande de vol électrique.

Avantageusement, le calculateur de surveillance vérifie qu'aucune erreur n'a été introduite lors de l'encodage des données.

Suivant des modes particuliers de réalisation, le système de commande de vol électrique comporte l'une ou plusieurs des caractéristiques suivantes :
- les unités d'encodage des calculateurs de commande de la commande de pilotage et les unités d'encodage des calculateurs de surveillance de la commande de pilotage sont propres à mettre en œuvre un premier contrôle de redondance cyclique sur un premier paquet de données représentatives desdites positions du manche et un second contrôle de redondance cyclique sur un second paquet de données représentatives desdites positions du manche; ledit second paquet de données comprenant plusieurs premiers paquets de données.
- il comporte :
   - une unique liaison de commandes unidirectionnelle de pilotage, dite première liaison auxiliaire de pilotage, propre à transmettre les positions du manche encodées du calculateur de commande du premier étage de la commande de pilotage au calculateur de commande du deuxième étage du calcul de position des gouvernes ;
   - une unique liaison de commandes unidirectionnelle de pilotage, dite première liaison de pilotage de secours, propre à transmettre les positions du manche encodées du calculateur de commande du premier étage de la commande de pilotage au calculateur de commande du troisième étage du calcul de position des gouvernes,
- le calculateur de surveillance du deuxième étage et le calculateur de surveillance du troisième étage du calcul de position des gouvernes sont connectés à ladite première liaison auxiliaire de pilotage et respectivement à ladite première liaison de pilotage de secours, par des liaisons de commandes ;
- il comporte :
   - une unique liaison de commandes unidirectionnelle de pilotage, dite deuxième liaison auxiliaire de pilotage, propre à transmettre les positions du manche encodées du calculateur de commande du deuxième étage de la commande de pilotage au calculateur de commande du troisième étage du calcul de position des gouvernes ;
   - une unique liaison de commandes unidirectionnelle de pilotage, dite deuxième liaison de pilotage de secours, propre à transmettre les positions du manche encodées du calculateur de commande du deuxième étage de la commande de pilotage au calculateur de commande du premier étage du calcul de position des gouvernes,
- le calculateur de surveillance du troisième étage et le calculateur de surveillance du premier étage du calcul de position des gouvernes sont connectés à ladite deuxième liaison auxiliaire de pilotage et respectivement à ladite deuxième liaison de pilotage de secours, par des liaisons de commandes,
- il comporte :
   - une unique liaison de commandes unidirectionnelle de pilotage, dite troisième liaison auxiliaire de pilotage, propre à transmettre les positions du manche encodées du calculateur de commande du troisième étage de la commande de pilotage au calculateur de commande du premier étage du calcul de position des gouvernes ;
   - une unique liaison de commandes unidirectionnelle de pilotage, dite troisième liaison de pilotage de secours, propre à transmettre les positions du manche encodées du calculateur de commande du troisième étage de la commande de pilotage au calculateur de commande du deuxième étage du calcul de position des gouvernes,
- le calculateur de surveillance du premier étage et le calculateur de surveillance du deuxième étage du calcul de position des gouvernes sont connectés à ladite troisième liaison auxiliaire de pilotage et respectivement à ladite troisième liaison de pilotage de secours, par des liaisons de commandes,
- le calcul de position des gouvernes est propre à réceptionner des positions réelles de gouvernes, au moins un calculateur de commande et un calculateur de surveillance du calcul de position des gouvernes étant propre à calculer des commandes d'effort en fonction des positions réelles des gouvernes réceptionnées, et en ce que le système de commande comporte :
- une unique liaison de commandes unidirectionnelle de retour d'effort, dite première liaison de retour d'effort, propre à transmettre lesdites commandes d'effort du calculateur de commande du premier étage du calcul de position des gouvernes au calculateur de commande du premier étage de la commande de pilotage ;
- une unique liaison de commandes unidirectionnelle de retour d'effort, dite deuxième liaison de retour d'effort, propre à transmettre lesdites commandes d'effort du calculateur de commande du deuxième étage du calcul de position des gouvernes au calculateur de commande du deuxième étage de la commande de pilotage ;
- une unique liaison de commandes unidirectionnelle de retour d'effort, dite troisième liaison de retour d'effort, propre à transmettre lesdites commandes d'effort du calculateur de commande du troisième étage du calcul de position des gouvernes au calculateur de commande du troisième étage de la commande de pilotage,
- les calculateurs de commande du calcul de position des gouvernes comporte chacun une unité d'encodage pour encoder les commandes d'effort, et en ce que lesdits calculateurs de surveillance du calcul de position des gouvernes comporte chacun une unité d'encodage propre à décoder les commandes d'effort encodées ; lesdites unités d'encodage des calculateurs de surveillance du premier étage, du deuxième étage et du troisième étage du calcul de position des gouvernes étant connectées à ladite première, deuxième et respectivement troisième liaisons de retour d'effort par l'intermédiaire de liaisons de commandes ; lesdits calculateurs de surveillance du calcul de position des gouvernes étant propres à vérifier l'intégrité des commandes d'effort décodées par lesdites unités d'encodage,
- le calculateur de surveillance du premier étage de la commande de pilotage, le calculateur de commande et le calculateur de surveillance du deuxième étage de la commande de pilotage, le calculateur de commande et le calculateur de surveillance du troisième étage de la commande de pilotage sont chacun connectés à ladite première liaison de retour d'effort par l'intermédiaire de liaisons de commandes ;
le calculateur de surveillance du deuxième étage de la commande de pilotage, le calculateur de commande et le calculateur de surveillance du premier étage de la commande de pilotage, le calculateur de commande et le calculateur de surveillance du troisième étage de la commande de pilotage sont chacun connectés à ladite deuxième liaison de retour d'effort par l'intermédiaire de liaisons de commandes ;
le calculateur de surveillance du troisième étage de la commande de pilotage, le calculateur de commande et le calculateur de surveillance du premier étage de la commande de pilotage, le calculateur de commande et le calculateur de surveillance du deuxième étage de la commande de pilotage sont chacun connectés à ladite troisième liaison de retour d'effort par l'intermédiaire de liaisons de commandes.

L'invention a également pour objet un système de commande de vol électrique pour aéronef comportant des gouvernes aérodynamiques, des actionneurs aptes à entrainer lesdites gouvernes aérodynamiques en fonction d'instructions d'entraînement, un manche propre à être déplacé pour piloter l'entrainement desdites gouvernes aérodynamiques, le système de commandes comprenant :
- un calcul de position des gouvernes comportant un premier étage et un deuxième étage comprenant chacun :
   - un calculateur de commande propre à réceptionner des positions du manche et à calculer des positions des gouvernes à partir des positions du manche, ledit calculateur de commande comporte une unité d'encodage propre à générer des positions des gouvernes encodées, et
   - un calculateur de surveillance apte à vérifier l'intégrité des positions des gouvernes calculées par le calculateur de commande;
- une commande d'actionneurs comportant un premier étage et un deuxième étage comprenant chacun :
   - un calculateur de commande propre à déterminer des instructions d'entrainement des actionneurs de gouvernes aérodynamiques à partir des positions des gouvernes, et
   - un calculateur de surveillance apte à vérifier l'intégrité des instructions d'entraînement déterminées par ledit calculateur de commande ;
- une liaison de commandes unidirectionnelle de position des gouvernes, dite première liaison principale de commandes, connectant le calculateur de commande du premier étage du calcul de position des gouvernes au calculateur de commande du premier étage de la commande d'actionneurs ;
- une liaison de commandes unidirectionnelle de positions des gouvernes, dite deuxième liaison principale de commandes, connectant le calculateur de commande du deuxième étage du calcul de position des gouvernes au calculateur de commande du deuxième étage de la commande d'actionneurs ;
   caractérisé en ce que le calcul de position des gouvernes comporte un troisième étage comprenant :
   - un calculateur de commande propre à réceptionner des positions du manche et à calculer des positions des gouvernes à partir des positions du manche, ledit calculateur de commande comporte une unité d'encodage propre à générer des positions des gouvernes encodées ;
   - un calculateur de surveillance apte à vérifier l'intégrité des positions des gouvernes calculées par le calculateur de commande ;
   et en ce que la commande d'actionneurs comporte un troisième étage comportant:
   - un calculateur de commande propre à calculer des instructions d'entraînement à partir des positions des gouvernes encodées, et
   - un calculateur de surveillance apte à vérifier l'intégrité des instructions d'entraînement calculées par le calculateur de commande ;
   et en ce que le système de commande comporte :
   - une liaison de commandes unidirectionnelle de positions des gouvernes , dite troisième liaison principale de commandes, connectant le calculateur de commande du troisième étage du calcul de positions des gouvernes au calculateur de commande du troisième étage de la commande d'actionneurs ;
et en ce que la première liaison principale de commandes est l'unique liaison de commandes propre à transmettre les positions des gouvernes encodées du calculateur de commande du premier étage du calcul de position des gouvernes au calculateur de commande du premier étage de la commande d'actionneurs ;
la deuxième liaison principale de commandes étant l'unique liaison de commandes propre à transmettre les positions des gouvernes encodées du calculateur de commande du deuxième étage du calcul de position des gouvernes au calculateur de commande du deuxième étage de la commande d'actionneurs ;
la troisième liaison principale de commandes est l'unique liaison de commandes propre à transmettre les positions des gouvernes encodées du calculateur de commande du troisième étage du calcul de position des gouvernes au calculateur de commande du troisième étage de la commande d'actionneurs ;
les calculateurs de surveillance du premier étage, du deuxième étage et du troisième étage du calcul de position des gouvernes étant chacun connectés à ladite première, deuxième et respectivement troisième liaisons de commandes, par l'intermédiaire de liaisons de commandes pour réceptionner positions des gouvernes encodées ;
les calculateurs de surveillance du calcul de position des gouvernes comportant chacun une unité d'encodage propre à décoder les positions des gouvernes encodées ; les calculateurs de surveillance du calcul de position des gouvernes étant propres à vérifier l'intégrité des positions des gouvernes décodées par lesdites unités d'encodage.

Suivant des modes particuliers de réalisation, le système de commande de vol électrique comporte l'une ou plusieurs des caractéristiques suivantes :
- les unités d'encodage du calculateur de commande du calcul de position des gouvernes et les unités d'encodage du calculateur de surveillance de la commande d'actionneurs sont propres à mettre en œuvre un premier contrôle de redondance cyclique sur un premier paquet de données représentatives desdites positions du manche et un second contrôle de redondance cyclique sur un second paquet de données représentatives desdites positions du manche; ledit second paquet de données comprenant plusieurs premiers paquets de données,
- il comporte :
   - une unique liaison de commandes unidirectionnelle, dite première liaison auxiliaire de commandes, propre à transmettre les positions des gouvernes encodées du calculateur de commande du premier étage du calcul de position des gouvernes au calculateur de commande du deuxième étage de la commande d'actionneurs ;
   - une unique liaison de commandes unidirectionnelle, dite première liaison de commandes de secours, propre à transmettre les positions des gouvernes encodées du calculateur de commande du premier étage du calcul de position des gouvernes calculateur de commande du troisième étage de la commande d'actionneurs,
- le calculateur de surveillance du deuxième étage et le calculateur de surveillance du troisième étage de la commande d'actionneurs sont connectés à ladite première liaison auxiliaire de commandes et respectivement à ladite première liaison de commandes de secours, par l'intermédiaire de liaisons de commandes.
- il comporte :
   - une unique liaison de commandes unidirectionnelle, dite deuxième liaison auxiliaire de commandes, propre à transmettre les positions des gouvernes encodées du calculateur de commande du deuxième étage du calcul de position des gouvernes au calculateur de commande du troisième étage de la commande d'actionneurs ;
   - une unique liaison de commandes unidirectionnelle, dite deuxième liaison de commandes de secours, propre à transmettre les positions des gouvernes encodées du calculateur de commande du deuxième étage du calcul de position des gouvernes au calculateur de commande du premier étage de la commande d'actionneurs,
- le calculateur de surveillance du troisième étage et le calculateur de surveillance du premier étage de la commande d'actionneurs sont connectés à ladite deuxième liaison auxiliaire de commandes et respectivement à ladite deuxième liaison de commandes de secours par l'intermédiaire de liaison de commandes,
- il comporte :
   - une unique liaison de commandes unidirectionnelle, dite troisième liaison auxiliaire de commandes, propre à transmettre les positions des gouvernes encodées du calculateur de commande du troisième étage du calcul de position des gouvernes au calculateur de commande du premier étage de la commande d'actionneurs ;
   - une unique liaison de commandes unidirectionnelle, dite troisième liaison de commandes de secours, propre à transmettre les positions des gouvernes encodées du calculateur de commande du troisième étage du calcul de position des gouvernes au calculateur de commande du deuxième étage de la commande d'actionneurs,
- le calculateur de surveillance du premier étage et le calculateur de surveillance du deuxième étage de la commande d'actionneurs sont connectée à ladite troisième liaison auxiliaire de commandes et respectivement à ladite troisième liaison de commandes de secours, par l'intermédiaire de liaisons de commandes,
- les calculateurs de commande et les calculateurs de surveillance du premier, deuxième et troisième étages de la commande d'actionneurs sont propres à déterminer des positions réelles des gouvernes, et le système de commande comporte :
- une unique liaison de commandes unidirectionnelle de retour d'actionneurs, dite première liaison principale de retour d'actionneurs, propre à transmettre lesdites positions réelles des gouvernes du calculateur de commande du premier étage de la commande d'actionneurs au calculateur de commande du premier étage du calcul de position des gouvernes ;
- une unique liaison de commandes unidirectionnelle de retour d'actionneurs, dite deuxième liaison principale de retour d'actionneurs, propre à transmettre lesdites positions réelles des gouvernes du calculateur de commande du deuxième étage du calcul de position des gouvernes s au calculateur de commande du deuxième étage de la commande d'actionneurs ;
- une unique liaison de commandes unidirectionnelle de retour d'actionneurs, dite troisième liaison principale de retour d'actionneurs, propre à transmettre lesdites positions réelles des gouvernes du calculateur de commande du troisième étage de la commande d'actionneurs au calculateur de commande du troisième étage du calcul de position des gouvernes,
- les calculateurs de commande de la commande d'actionneurs comportent chacun une unité d'encodage propre à générer des positions des gouvernes encodées et en ce que les calculateurs de surveillance du premier étage, du deuxième étage et du troisième étage de la commande d'actionneurs sont connectées à ladite première, deuxième et respectivement troisième liaisons principales de retour d'actionneurs par l'intermédiaire de liaisons de commandes ; les calculateurs de surveillance de la commande d'actionneurs comportent chacun une unité propre à décoder les positions réelles des gouvernes encodées ; les calculateurs de surveillance de la commande d'actionneurs étant propres à vérifier l'intégrité des positions réelles des gouvernes décodées par lesdites unités d'encodage,
- le calculateur de surveillance du premier étage du calcul de position des gouvernes est connecté à ladite première liaison principale de retour d'actionneurs par l'intermédiaire d'une liaison de commandes ;
   le calculateur de surveillance du deuxième étage du calcul de position des gouvernes est connecté à ladite deuxième liaison principale de retour d'actionneurs par l'intermédiaire d'une liaison de commandes ;
   le calculateur de surveillance du troisième étage du calcul de position des gouvernes est connecté à ladite troisième liaison principale de retour d'actionneurs par l'intermédiaire d'une liaison de commandes,
- il comporte :
   - une unique liaison de commandes unidirectionnelle de retour d'actionneurs, dite première liaison auxiliaire de retour d'actionneurs, propre à transmettre les positions réelles des gouvernes encodées du calculateur de commande du premier étage de la commande d'actionneurs au calculateur de commande du deuxième étage du calcul de position des gouvernes ;
   - une unique liaison de commandes unidirectionnelle de retour d'actionneurs, dite première liaison de secours de retour d'actionneurs, propre à transmettre les positions réelles des gouvernes encodées du calculateur de commande du premier étage de la commande d'actionneurs au calculateur de commande du troisième étage du calcul de positions des gouvernes,
- le calculateur de surveillance du deuxième étage et le calculateur de surveillance du troisième étage du calcul de positions des gouvernes sont connectés à ladite première liaison auxiliaire de retour d'actionneurs et respectivement à ladite première liaison de secours de retour d'actionneurs, par l'intermédiaire de liaisons de commandes,
- il comporte :
   - une unique liaison de commandes unidirectionnelle de retour d'actionneurs, dite deuxième liaison auxiliaire de retour d'actionneurs, propre à transmettre les positions réelles des gouvernes encodées du calculateur de commande du deuxième étage de la commande d'actionneurs au calculateur de commande du troisième étage du calcul de positions des gouvernes ;
   - une unique liaison de commandes unidirectionnelle de retour d'actionneurs, dite deuxième liaison de retour d'actionneurs de secours, propre à transmettre les positions réelles des gouvernes encodées du calculateur de commande du deuxième étage de la commande d'actionneurs au calculateur de commande du premier étage du calcul de position des gouvernes.
- le calculateur de surveillance du troisième étage et le calculateur de surveillance du premier étage du calcul de position des gouvernes sont connectés à ladite deuxième liaison auxiliaire de retour d'actionneurs et respectivement à ladite deuxième liaison de retour d'actionneurs de secours, par l'intermédiaire de liaisons de commandes,
- il comporte :
   - une unique liaison de commandes unidirectionnelle de retour d'actionneurs, dite troisième liaison auxiliaire de retour d'actionneurs, propre à transmettre les positions réelles des gouvernes encodées du calculateur de commande du troisième étage de la commande d'actionneurs au calculateur de commande du premier étage du calcul de position des gouvernes ;
   - une unique liaison de commandes unidirectionnelle de retour d'actionneurs, dite troisième liaison de retour d'actionneurs de secours, propre à transmettre les positions réelles des gouvernes encodées du calculateur de commande du troisième étage de la commande d'actionneurs au calculateur de commande du deuxième étage du calcul de position des gouvernes,
- le calculateur de surveillance du premier étage et le calculateur de surveillance du deuxième étage du calcul de positions des gouvernes sont connectés à ladite troisième liaison auxiliaire de retour d'actionneurs et respectivement à ladite troisième liaison de retour d'actionneurs de secours, par l'intermédiaire de liaison de commandes.

Les liaisons auxiliaires et les liaisons de secours augmentent considérablement la disponibilité globale du système de commande puisque, par exemple, en cas de dysfonctionnement du calculateur de commande du premier étage du calcul de trajectoires, seul le calculateur de commande et le calculateur de surveillance du premier étage du calcul de trajectoires sont remplacés par le calculateur de commande et le calculateur de surveillance du deuxième étage du calcul de trajectoires. Le système de commande fonctionne alors avec le calculateur de commande et le calculateur de surveillance du premier étage de la commande de pilotage, le calculateur de commande et le calculateur de surveillance du deuxième étage du calcul de position des gouvernes et le calculateur de commande et le calculateur de surveillance du premier étage de la commande d'actionneurs. Le système autorise alors encore deux pannes au niveau de la commande de pilotage, une panne au niveau du calcul de position des gouvernes et deux pannes au niveau de la commande d'actionneurs.

Avantageusement, l'utilisation d'un contrôle de redondance cyclique sur deux quantités de données différentes permet de garantir l'intégrité des données transmises.

L'invention sera mieux comprise à la lecture de la description qui va suivre, donnée uniquement à titre d'exemple et faite en se référant :
- La figure 1 est une représentation schématique d'un système de commande de vol électrique selon l'état de la technique ;
- La figure 2 est une représentation schématique du système de commande de vol électrique selon l'invention dans laquelle seules les liaisons de communication de la commande de pilotage vers la commande d'actionneurs ont été représentées ;
- La figure 3 est un exemple schématique de trames d'encapsulage des données ; et
- La figure 4 est une représentation schématique de l'invention dans laquelle seules les liaisons de communication de la commande d'actionneurs vers la commande de pilotage ont été représentées.

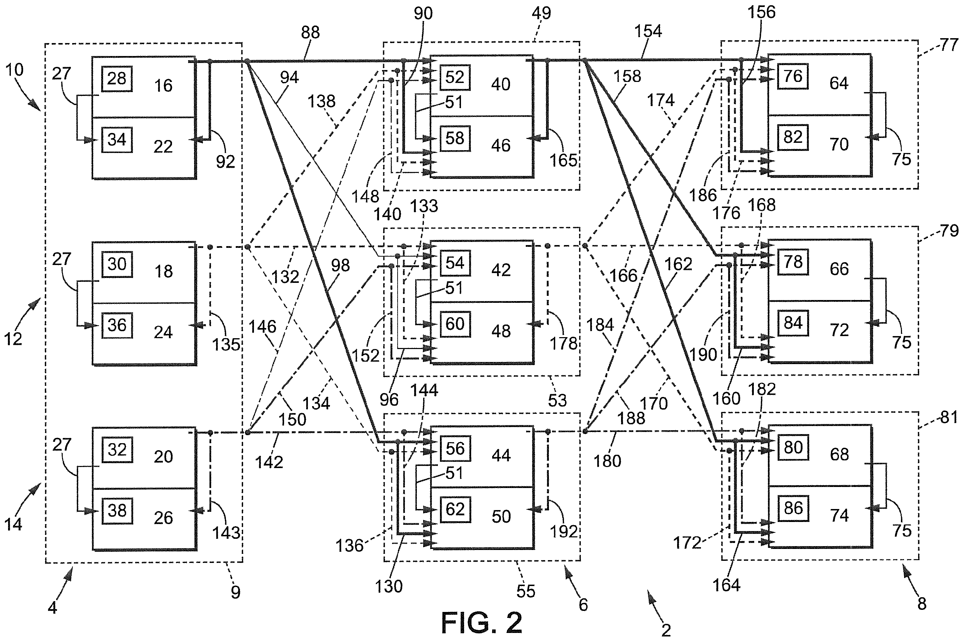

En référence à la figure 2, le système de commande 2 selon l'invention comporte une commande de pilotage 4, un calcul de position des gouvernes 6 et une commande d'actionneurs 8.

La commande de pilotage 4 comporte trois étages 10, 12, 14 agencés dans un mini manche 9, un manche ou une manette de commande ci-après appelé manche 9. Chaque étage 10, 12, 14 comporte un calculateur principal, appelé ci-après calculateur de commande 16, 18, 20 et un calculateur en redondance, ci-après appelé calculateur de surveillance 22, 24, 26 connecté au calculateur de commande de son étage par une liaison de communication 27.

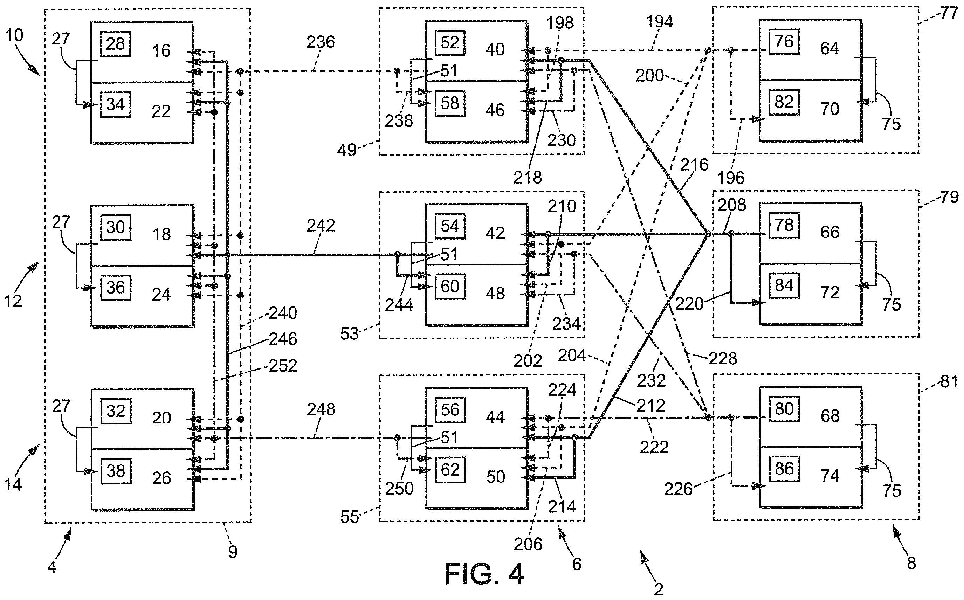

Le calculateur de commande 16 et le calculateur de surveillance 22 du premier étage 10 sont constitués par deux cartes de circuit imprimé disposées l'une en vis-à-vis de l'autre. De manière générale, l'ensemble des calculateurs de commande et des calculateurs de surveillance représentés par deux rectangles accolés l'un à l'autre sur les figures 2 et 4, sont constitués par deux cartes de circuit imprimé disposées l'une en vis-à-vis de l'autre dans un même boîtier.

Les calculateurs de commande 16, 18, 20 de chaque étage sont propres à déterminer les positions du manche en fonction de différentes mesures de positions détectées par des capteurs, potentiomètres ou autres. Les calculateurs de surveillance 22, 24, 26 de chaque étage sont aptes à vérifier l'exactitude des calculs réalisés par le calculateur de commande 16, 18, 20 auquel il est connecté.

A cet effet, les calculateurs de commande 16, 18, 20 communiquent aux calculateurs de surveillance 22, 24, 26 les positions du manche qu'ils ont calculées, par l'intermédiaire de la liaison de communication 27. Les calculateurs de surveillance 22, 24, 26 déterminent, par exemple, les positions du manche en utilisant une méthode de détermination différente de la méthode utilisée par les calculateurs de commande 16, 18, 20. Puis, les calculateurs de surveillance 22, 24, 26 comparent les positions du manche réceptionnées par la liaison de communication 27 avec les positions du manche qu'ils ont eux-mêmes déterminées. Si, par exemple, le calculateur de surveillance 22 du premier étage 106 de la commande de pilotage détecte des écarts entre les positions du manche réceptionnées et ceux qu'il a lui même déterminées, le calculateur de commande 16 et le calculateur de surveillance 22 du premier étage se mettent en défaut. Dans ce cas, le calculateur de commande 18 et le calculateur de surveillance 24 du deuxième étage 12 prennent le relais et transmettent les positions du manche au calcul de position des gouvernes 6.

Les calculateurs de commande 18, 20 et les calculateurs de surveillance 24, 26 du deuxième et du troisième étage de la commande de pilotage fonctionnent de la même manière.

Chaque calculateur de commande 16, 18, 20 de la commande de pilotage 4 comprend une unité d'encodage 28, 30, 32 apte à encoder les positions du manche à transmettre au calcul de position des gouvernes 6 et à décoder les commandes d'effort réceptionnées par le calcul de position des gouvernes 6.

En particulier, les unités d'encodage 28 à 32 sont propres à mettre en œuvre un premier contrôle de redondance cyclique sur un premier paquet de données P1 et un second contrôle de redondance cyclique sur un second paquet de données P2 ; le second paquet de données P2 comprenant plusieurs premiers paquets de données P1, comme illustré à titre d'exemple sur la figure 3.

Les unités d'encodage 28 à 32 sont également propres à mettre en œuvre un code correcteur d'erreurs destiné à corriger les éventuelles erreurs de transmission des données. Ainsi, lors du codage des données, les unités d'encodage 28 à 32 sont propres à générer un code de contrôle de redondance cyclique CRC1 et un code correcteur d'erreurs ECC transmis après chaque paquet de données P1 et un code de redondance cyclique CRC2 transmis après chaque paquet de données P2.

Lors du décodage des données, les unités d'encodage 28 à 38 sont propres à vérifier la fiabilité des données à l'aide des codes CRC2 et des codes CRC1, ainsi qu'à éventuellement corriger une ou plusieurs données à l'aide des codes ECC.

Chaque calculateur de surveillance 22, 24, 26 comporte une unité d'encodage 34, 36, 38, identiques aux unités d'encodage 28 à 32 et fonctionnant de la même manière. Les unités d'encodage 34 à 38 sont adaptées pour décoder les positions du manche et les commandes d'effort, comme décrit en détail ci-après.

Les techniques de codage de codes correcteurs et de contrôle de redondance cyclique utilisées par les unités d'encodage 28 à 38 sont les techniques d'encodage généralement utilisées pour la transmission d'informations. Elles ne sont pas décrites en détail dans la présente demande de brevet et ne font pas l'objet de celle-ci.

En variante, d'autres techniques de codage permettant d'assurer l'intégrité des données peuvent être utilisées comme par exemple le calcul de parité, les codes détecteurs d'erreurs, les codes correcteurs d'erreur, ...

Le calcul de position des gouvernes 6 comporte trois étages correspondant aux trois étages 10, 12, 14 de la commande de pilotage et qui seront référencés par les mêmes références pour simplifier la description.

Chaque étage 10, 12, 14 du calcul de position des gouvernes 6 comporte un calculateur principal, dit calculateur de commande 40, 42, 44, et un calculateur en redondance, appelé calculateur de surveillance 46, 48, 50 connecté au calculateur de commande 40, 42, 44 de son étage par une liaison de communication 51.

Les trois étages 10, 12, 14 du calcul de position des gouvernes 6 sont disposés généralement à trois endroits différents de l'aéronef en raison de leur encombrement important. Ainsi, le calculateur de commande 40 et le calculateur de surveillance 46 sont deux cartes de circuit imprimé en vis-à-vis l'une de l'autre dans un même boîtier 49. Le calculateur de commande 42 et le calculateur de surveillance 48 sont deux cartes de circuit imprimé en vis-à-vis l'une de l'autre dans un autre boîtier 53. Le calculateur de commande 44 et le calculateur de surveillance 50 sont deux cartes de circuit imprimé en vis-à-vis l'une de l'autre dans un dernier boîtier 55.

Les calculateurs de commande 40, 42, 44 sont aptes à calculer des trajectoires de vol en fonction des positions du manche déterminées par la commande de pilotage 4. Les calculateurs de surveillance 46, 48, 50 sont aptes à vérifier l'intégrité des trajectoires de vol calculées par les calculateurs de commande 40, 42, 44 de leur étage, de la même façon que celle décrite pour les calculateurs de surveillance de la commande de pilotage 4.

Les calculateurs de commande 40, 42, 44 et les calculateurs de surveillance 46, 48, 50 de chaque étage du calcul de position des gouvernes 6 comportent chacun une unité d'encodage 52, 54, 56, 58, 60, 62 identiques aux unités d'encodages 28 à 38 et qui ne seront pas décrites à nouveau en détail. Les unités d'encodage 52 à 56 sont propres à décoder les positions du manche et les positions des gouvernes et à encoder des positions de gouvernes et des commandes d'effort. Les unités d'encodage 58 à 62 sont propres à décoder les positions du manche, les positions des gouvernes demandées, les positions réelles des gouvernes et les commandes d'effort.

Le calculateur de commande 40 et le calculateur de surveillance 46 du premier étage sont également connectés au calculateur de commande 42 et au calculateur de surveillance 48 du deuxième étage ainsi qu'au calculateur de commande 44 et au calculateur de surveillance 50 du troisième étage 14 pour leur transmettre des données de synchronisation par des liaisons de communication non représentées sur la figure 2.

La commande d'actionneurs 8 comporte également trois étages correspondant aux trois étages de la commande de pilotage 4 et portant les mêmes références 10, 12, 14. De la même façon, chaque étage 10, 12, 14 de la commande d'actionneurs 8 comporte un calculateur principal, dit calculateur de commande 64, 66, 68, et un calculateur en redondance, appelé calculateur de surveillance 70, 72, 74, connecté au calculateur de commande de son étage par une liaison de communication 75. Les trois étages de la commande d'actionneurs sont positionnés à des endroits différents dans l'aéronef. Le calculateur de commande 64 et le calculateur de surveillance 70 sont deux cartes de circuit imprimé en vis-à-vis l'une de l'autre dans un même boîtier 77. Le calculateur de commande 66 et le calculateur de surveillance 72 sont deux cartes de circuit imprimé en vis-à-vis l'une de l'autre dans un autre boîtier 79. Le calculateur de commande 68 et le calculateur de surveillance 74 sont deux cartes de circuit imprimé en vis-à-vis l'une de l'autre dans un dernier boîtier 81.

Les calculateurs de commande 64, 66, 68 sont propres à calculer des instructions d'entraînement des actionneurs des gouvernes aérodynamiques en fonction des trajectoires de vol calculées par le calcul de position des gouvernes 6. Les calculateurs de surveillance 70, 72, 74 des trois étages de la commande d'actionneurs 8 fonctionnent de la même façon que les calculateurs de surveillance des trois étages de la commande de pilotage 4 et leur fonctionnement ne sera pas décrit à nouveau en détail. En particulier, chaque calculateur de surveillance 70, 72, 74 est propre à vérifier l'intégrité des instructions d'entraînement calculées par le calculateur de commande de son étage.

Les calculateurs de commande 64, 66, 68 et les calculateurs de surveillance 70, 72, 74 des trois étages de la commande d'actionneurs 8 comportent chacun une unité d'encodage 76, 78, 80, 82, 84, 86 identiques aux unités d'encodage 28 à 32 et qui ne seront pas décrites à nouveau en détail. Les unités d'encodage 76 à 80 sont propres à décoder les trajectoires de vol transmises par le calcul de trajectoires 6 et à encoder les positions des gouvernes. Les unités d'encodage 82 à 86 sont propres à décoder les positions des gouvernes demandées et à décoder les positions réelles des gouvernes.

Les liaisons de communication permettant le transfert de données de la commande de pilotage 4 vers la commande d'actionneurs 8 vont à présent être décrites.

Le calculateur de commande 16 est connecté au calculateur de commande 40 par une liaison unidirectionnelle de commandes de pilotage, dite première liaison principale de pilotage 88. Cette liaison principale de pilotage 88 ainsi que l'ensemble des liaisons unidirectionnelles de commandes du système de commandes selon l'invention sont réalisées à l'aide d'un bus de communication.

Selon la présente demande de brevet, le terme unidirectionnel fait référence à un canal qui transporte l'information dans un seul sens.

La première liaison principale de pilotage 88 est propre à transporter les positions du manche 9 du calculateur de commande 16 au calculateur de commande 40.

Le calculateur de surveillance 22 du premier étage 10 de la commande de pilotage est raccordé à la première liaison principale de pilotage 88 par une liaison de commandes 92 à un point de raccordement ; ledit point de raccordement étant situé entre la fin de la chaîne de calcul, de traitement et d'encodage des données et la sortie du calculateur de commande 16 du premier étage 10 de la commande de pilotage.

L'unité d'encodage 34 est apte à décoder les positions du manche réceptionnées par le calculateur de surveillance 22, via la liaison de commandes 92. Le calculateur de surveillance 22 est apte à vérifier l'intégrité des positions du manche décodées par l'unité d'encodage 34. Si les positions du manche décodées sont différentes des positions du manche transmises par le calculateur de commande 16 avant codage par la liaison de communication 27, alors le calculateur de commande 16 et le calculateur de surveillance 22 du premier étage 10 de la commande de pilotage se mettent en défaut et sont relayés par le calculateur de commande 18 et le calculateur de surveillance 24 du deuxième étage 12 de la commande de pilotage.

Avantageusement, la liaison de commandes 92, l'unité d'encodage 34 et le calculateur de surveillance 22 du premier étage de la commande de pilotage permettent de vérifier les positions du manche sous un format tel que transmis au calcul de position des gouvernes de sorte que toute la chaine de calcul et de traitement des données du calculateur de commande 16 est vérifiée, y compris la partie encodage. Ainsi, cette seconde vérification de l'intégrité des données par le calculateur de surveillance 22 assurent un niveau de sécurité supplémentaire au système de commande selon l'invention.

Le calculateur de surveillance 46 du premier étage 10 du calcul de position des gouvernes 6 est raccordé à la première liaison principale de pilotage 88 par une liaison de commandes 90 à un point de raccordement ; ledit point de raccordement étant situé à un emplacement proche de l'entrée du calculateur de commande 40. Le terme « à un emplacement proche » signifie, dans la présente demande de brevet, que la liaison est réalisée entre les deux cartes de circuit imprimé situées dans le même boîtier et que donc la liaison de commandes 90 ne s'étend pas dans l'aéronef entre deux boîtiers différents.

De la même façon, la liaison de commandes 92 est réalisée soit par un câble de quelques centimètres s'étendant entre les deux cartes de circuit imprimé du calculateur de commande 16 et du calculateur de surveillance 22, soit par des points de soudure entre ces deux cartes de circuit imprimé.

Avantageusement, un seul câble, i.e. la première liaison principale unidirectionnelle de pilotage 88, s'étend dans l'aéronef entre le manche 9 et le boîtier 49 contenant le premier étage du calcul de trajectoires et non deux câbles 112, 114 comme dans le système de commande de l'état de la technique. Ainsi, le système de commande selon l'invention est moins volumineux et moins lourd.

L'unité d'encodage 58 décode les positions du manche réceptionnées par l'intermédiaire de la liaison de commandes 90. Le calculateur de surveillance 46 du premier étage du calcul de position des gouvernes utilise les positions du manche décodées par l'unité d'encodage 58 pour calculer les trajectoires de vol. Ainsi avantageusement, le calculateur de surveillance 46 du premier étage du calcul de position des gouvernes réceptionne exactement les mêmes données que le calculateur de commande 40 du premier étage du calcul de position des gouvernes .

Le calculateur de commande 16 du premier étage de la commande de pilotage est connecté au calculateur de commande 42 du deuxième étage du calcul de position des gouvernes par une unique liaison de commandes unidirectionnelle, appelée première liaison auxiliaire de pilotage 94. Le calculateur de surveillance 48 du deuxième étage du calcul de position des gouvernes est raccordé à la première liaison auxiliaire de pilotage 94 par l'intermédiaire d'une liaison de commandes 96 raccordée à un point de raccordement ; ledit point de raccordement étant situé proche de l'entrée du calculateur de commande 42 du deuxième étage du calcul de position des gouvernes . Ainsi, le calculateur de surveillance 48 réceptionne les mêmes données que le calculateur de commande 42 du deuxième étage du calcul de position des gouvernes .

Le calculateur de commande 16 est propre à transmettre les positions du manche encodées au calculateur de commande 42 et au calculateur de surveillance 48 du deuxième étage du calcul de position des gouvernes par l'intermédiaire de la première liaison auxiliaire de pilotage 94.

De la même façon, le calculateur de commande 16 du premier étage de la commande de pilotage est connecté au calculateur de commande 44 du troisième étage du calcul de position des gouvernes par l'intermédiaire d'une liaison de commandes unidirectionnelle, appelée première liaison de pilotage de secours 98. Le calculateur de surveillance 50 du troisième étage du calcul de position des gouvernes est raccordé à la première liaison de pilotage de secours 98, par une liaison de commandes 130 raccordée à un point de raccordement ; ledit point de raccordement étant situé à un emplacement proche de l'entrée du calculateur de commande 44 du troisième étage du calcul de position des gouvernes.

Le calculateur de commande 16 est propre à transmettre les positions du manche encodées au calculateur de commande 44 et au calculateur de surveillance 50 du troisième étage du calcul de position des gouvernes par l'intermédiaire de la première liaison de pilotage de secours 130.

Ainsi, avantageusement, les calculateurs de commande 16 et de surveillance 22 du premier étage de la commande de pilotage sont propres à transmettre les positions du manche encodées aux calculateurs de commande 42, 44 et de surveillance 48, 50 du deuxième étage et du troisième étage du calcul de position des gouvernes, en cas de défaillance des calculateurs du premier étage du calcul de position des gouvernes.

Le schéma de connexion et le mode de fonctionnement décrits ci-dessus sont également utilisés pour les calculateurs de commande et de surveillance du deuxième étage et du troisième étage de la commande de pilotage et ne seront pas décrites à nouveau. Seules les liaisons entre ceux-ci sont décrites ci-dessous.

Le calculateur de commande 18 du deuxième étage de la commande de pilotage est connecté au calculateur de commande 42 du deuxième étage du calcul de position des gouvernes par une unique liaison de commandes unidirectionnelle, dite deuxième liaison principale de pilotage 132.

Le calculateur de surveillance 48 du deuxième étage du calcul de position des gouvernes est raccordé à la deuxième liaison principale de pilotage 132, par une liaison de commandes 133 raccordée à un point de raccordement ; ledit point de raccordement étant situé proche de l'entrée du calculateur de commande 42 du deuxième étage du calcul de position des gouvernes.

Le calculateur de surveillance 24 du deuxième étage de la commande de pilotage est raccordé à la deuxième liaison principale de pilotage 132, par une liaison de commandes 135 raccordée à un point de raccordement ; ledit point de raccordement étant situé proche de la sortie du calculateur de commande 18 du deuxième étage de la commande de pilotage.

Le calculateur de commande 18 du deuxième étage de la commande de pilotage est raccordé au calculateur de commande 44 du troisième étage du calcul de position des gouvernes par une unique liaison de commandes unidirectionnelle, dite deuxième liaison auxiliaire de pilotage 134.

Le calculateur de surveillance 50 du troisième étage du calcul de position des gouvernes est raccordé à la deuxième liaison auxiliaire de pilotage 134, par une liaison de commandes 136 raccordée à un point de raccordement ; ledit point de raccordement étant situé proche de l'entrée du calculateur de commande 44 du troisième étage du calcul de position des gouvernes.

Le calculateur de commande 18 du deuxième étage de la commande de pilotage est relié au calculateur de commande 40 du premier étage du calcul de position des gouvernes par une unique liaison de commandes unidirectionnelle, dite deuxième liaison de pilotage de secours 138.

Le calculateur de surveillance 46 du premier étage du calcul de position des gouvernes est raccordé à la deuxième liaison de pilotage de secours 138 par une liaison de commandes 140 raccordée à un point de raccordement ; ledit point de raccordement étant situé proche de l'entrée du calculateur de commande 40 du premier étage du calcul de position des gouvernes.

Le calculateur de commande 20 du troisième étage de la commande de pilotage est connecté au calculateur de commande 44 du troisième étage du calcul de position des gouvernes par une unique liaison de commandes unidirectionnelle, dite troisième liaison principale de pilotage 142.

Le calculateur de surveillance 26 du troisième étage de la commande de pilotage est raccordée à la troisième liaison principale de pilotage 142, par une liaison de commandes 143, à un point de raccordement proche de l'entrée du calculateur de commande 20.

Le calculateur de surveillance 50 du troisième étage du calcul de position des gouvernes est raccordé à la troisième liaison principale de pilotage 142 par une liaison de commandes 144 raccordée à un point de raccordement ; ledit point de raccordement étant situé proche de l'entrée du calculateur de commande 44 du troisième étage du calcul de position des gouvernes.

Le calculateur de commande 20 du troisième étage de la commande de pilotage est raccordé au calculateur de commande 40 du premier étage du calcul de position des gouvernes par l'intermédiaire d'une unique liaison de commandes unidirectionnelle, dite troisième liaison auxiliaire de pilotage 146.

Le calculateur de surveillance 46 du premier étage du calcul de position des gouvernes est raccordé à la troisième liaison auxiliaire de pilotage 146, par l'intermédiaire d'une liaison de commandes 148 raccordée à un point de raccordement ; ledit point de raccordement étant situé proche de l'entrée du calculateur de commande 40 du premier étage du calcul de position des gouvernes.

Le calculateur de commande 20 du troisième étage de la commande de pilotage est raccordé au calculateur de commande 42 du deuxième étage du calcul de position des gouvernes par une unique liaison de commandes unidirectionnelle, dite troisième liaison de pilotage de secours 150.

Le calculateur de surveillance 48 du deuxième étage du calcul de position des gouvernes est relié à la troisième liaison de pilotage de secours 150, par l'intermédiaire d'une liaison de commandes 152 raccordée à un point de raccordement ; ledit point de raccordement étant situé proche de l'entrée du calculateur de commande 42 du deuxième étage du calcul de position des gouvernes.

Les calculateurs de commande 18, 20 du deuxième et du troisième étage de la commande de pilotage sont propres à transmettre les positions du manche encodées aux calculateurs de commande et de surveillance 40 à 50 du calcul de position des gouvernes par l'ensemble des liaisons de commandes unidirectionnelles 132 à 150.

Les calculateurs de commande 40, 42, 44 du premier, deuxième et troisième étages du calcul de position des gouvernes sont propres à transmettre les positions des gouvernes encodées aux calculateurs de commande 64, 66, 68 et aux calculateurs de surveillance 70, 72, 74 des premier, deuxième et troisième étages de la commande d'actionneurs, par l'intermédiaire des liaisons de commandes unidirectionnelles 154 à 188.

Le maillage des liaisons de communication ainsi que le mode de fonctionnement des calculateurs de commande et de surveillance sont identiques et présentent les mêmes avantages que le maillage et le mode de fonctionnement des calculateurs de commande et de surveillance décrit ci-dessus pour la transmission des données entre la commande de pilotage 4 et le calcul de position des gouvernes 6. Ils ne seront pas décrits en détail à nouveau.

Ainsi, avantageusement, tout comme les calculateurs de surveillance 22, 24, 26 de la commande de pilotage, les calculateurs de surveillance 46, 48, 50 du calcul de position des gouvernes réalisent deux vérifications des calculs et traitements réalisées par les calculateurs de commande 40, 42, 44: un premier par comparaison avec les positions des gouvernes transmises par les liaisons de communication 51 avant codage et un deuxième par comparaison avec les positions des gouvernes encodées transmises par les liaison de commandes 165, 178, 192.

Avantageusement, les calculateurs de commande d'un étage donné du calcul de position des gouvernes sont reliés par des liaisons de communication « croisées » avec les calculateurs de commande des autres étages de la commande d'actionneurs.

Les calculateurs de surveillance 70, 72, 74 de la commande d'actionneurs réceptionnent les mêmes données d'entrée que les calculateurs de commande 64, 66, 68.

Les liaisons de communication entre le calcul de position des gouvernes 6 et la commande d'actionneurs 8 sont décrites ci-dessous.

Le calculateur de commande 40 du premier étage du calcul de position des gouvernes est connecté au calculateur de commande 64 du premier étage de la commande d'actionneurs par une unique liaison de commandes unidirectionnelle, dite première liaison principale de commandes 154. Le calculateur de surveillance 70 du premier étage de la commande d'actionneurs est relié à la première liaison principale de commandes 154 par une liaison de commandes 156 raccordée à un point de raccordement ; ledit point de raccordement étant situé proche de l'entrée du calculateur de commande 64 du premier étage de la commande d'actionneurs.

Le calculateur de commande 40 du premier étage du calcul de trajectoires est connecté au calculateur de commande 66 du deuxième étage de la commande d'actionneurs par une unique liaison de commandes unidirectionnelle, dite première liaison auxiliaire de commandes 158. Le calculateur de surveillance 72 du deuxième étage de la commande d'actionneurs est raccordé à la première liaison auxiliaire de commandes 158 par l'intermédiaire d'une liaison de commandes 160 raccordée à un point de raccordement ; ledit point de raccordement étant situé proche de l'entrée du calculateur de commande 66 du deuxième étage de la commande d'actionneurs.

Le calculateur de commande 40 du premier étage du calcul de position des gouvernes est connecté au calculateur de commande 68 du troisième étage de la commande d'actionneurs par l'intermédiaire d'une unique liaison de commandes unidirectionnelle, dite première liaison de commandes de secours 162. Le calculateur de surveillance 74 du troisième étage de la commande d'actionneurs est raccordé à la première liaison de commandes de secours 162 par l'intermédiaire d'une liaison de commandes 164 raccordée à un point de raccordement ; ledit point de raccordement étant situé proche de l'entrée du calculateur de commande 68 du troisième étage de la commande d'actionneurs.

Le calculateur de surveillance 46 du premier étage du calcul de position des gouvernes est raccordé à la première liaison principale de commandes 154, par l'intermédiaire d'une liaison de commandes 165 raccordée à un point de raccordement ; ledit point de raccordement étant situé proche de la sortie du calculateur de commande 40 du premier étage du calcul de position des gouvernes pour réceptionner les positions des gouvernes encodées et vérifier leur intégrité.

Le calculateur de commande 42 du deuxième étage du calcul de position des gouvernes est connecté au calculateur de commande 66 du deuxième étage de la commande d'actionneurs par l'intermédiaire d'une unique liaison de commandes unidirectionnelle, dite deuxième liaison principale de commandes 166. Le calculateur de surveillance 72 du deuxième étage de la commande d'actionneurs est raccordé à la deuxième liaison principale de commandes 166, par l'intermédiaire d'une liaison de commandes 168 raccordée à un point de raccordement ; ledit point de raccordement étant situé proche de l'entrée du calculateur de commande 166 du deuxième étage de la commande d'actionneurs.

Le calculateur de commande 42 du deuxième étage du calcul de position des gouvernes est connecté au calculateur de commande 68 du troisième étage de la commande d'actionneurs par une liaison de commandes, dite deuxième liaison auxiliaire de commandes 170. Le calculateur de surveillance 74 est raccordé à la deuxième liaison auxiliaire de commandes 170, par l'intermédiaire d'une liaison de commandes 172 raccordée à un point de raccordement ; ledit point de raccordement étant situé proche de l'entrée du calculateur de commande 68 du troisième étage de la commande d'actionneurs.

Le calculateur de commande 42 du deuxième étage du calcul de position des gouvernes est relié au calculateur de commande 64 du premier étage de la commande d'actionneurs par l'intermédiaire d'une unique liaison de commandes de position des gouvernes, dite deuxième liaison de commandes de secours 174. Le calculateur de surveillance 70 du premier étage de la commande d'actionneurs est raccordé à la deuxième liaison de commandes de secours 174 par l'intermédiaire d'une liaison de commandes 176 raccordée à un point de raccordement ; ledit point de raccordement étant situé proche de l'entrée du calculateur de commande 64 du premier étage de la commande d'actionneurs.

Le calculateur de surveillance 48 du deuxième étage du calcul de position des gouvernes est raccordé à la deuxième liaison principale de commandes 166 par l'intermédiaire d'une liaison de commandes 178 raccordée à un point de raccordement ; ledit point de raccordement étant situé proche de la sortie du calculateur de commande 42 du deuxième étage du calcul de position des gouvernes pour réceptionner les positions des gouvernes encodées et vérifier l'intégrité de celles-ci.

Le calculateur de commande 44 du troisième étage du calcul de position des gouvernes est connecté au calculateur de commande 68 du troisième étage de la commande d'actionneurs, par une unique liaison de commandes unidirectionnelle, dite troisième liaison principale de commandes 180. Le calculateur de surveillance 74 est raccordé à la troisième liaison principale de commandes 180, par l'intermédiaire d'une liaison de commandes 182 raccordée à un point de raccordement ; ledit point de raccordement étant situé proche de l'entrée du calculateur de commande 68 du troisième étage de la commande d'actionneurs.

Le calculateur de commande 44 du troisième étage du calcul de position des gouvernes est connecté au calculateur de commande 64 du premier étage de la commande d'actionneurs par l'intermédiaire d'une unique liaison de commandes unidirectionnelle, dite troisième liaison auxiliaire de commandes 184. Le calculateur de surveillance 70 du premier étage de la commande d'actionneurs est raccordé à la troisième liaison auxiliaire de commandes 184 par l'intermédiaire d'une liaison de commandes 186 raccordée à un point de raccordement ; ledit point de raccordement étant situé proche de l'entrée du calculateur de commande 64 du premier étage de la commande d'actionneurs.

Le calculateur de commande 44 du troisième étage du calcul de position des gouvernes est relié au calculateur de commande 66 du deuxième étage de la commande d'actionneurs, par l'intermédiaire d'une unique liaison de commandes unidirectionnelle, dite troisième liaison de commandes de secours 188. Le calculateur de surveillance 72 du deuxième étage de la commande d'actionneurs est raccordé à la troisième liaison de commandes de secours 188, par l'intermédiaire d'une liaison de commandes 190. La liaison de commandes 190 est raccordée à un point de raccordement ; ledit point de raccordement étant situé proche de l'entrée du calculateur de commande 66 du deuxième étage de la commande d'actionneurs.

Le calculateur de surveillance 50 du troisième étage du calcul de position des gouvernes est raccordé à la troisième liaison principale de commandes 180, par une liaison de commandes 192. Cette liaison de commande 192 est raccordée à un point de raccordement ; ledit point de raccordement étant situé proche de la sortie du calculateur de commande 44 du troisième étage du calcul de position des gouvernes pour réceptionner les positions des gouvernes encodées et vérifier leur intégrité.

Les calculateurs de commande 64, 66, 68 du premier, deuxième et troisième étages de la commande d'actionneurs sont propres à transmettre les instructions d'entraînement aux actionneurs des gouvernes aérodynamiques par l'intermédiaire de liaisons de communications non représentés.

Des capteurs, potentiomètres et autres mesurent les déplacements réalisés par les actionneurs et transmettent ces mesures aux calculateurs de commande 64, 66, 68 et aux calculateurs de surveillance 70, 72, 74.

Les calculateurs de commande 64, 66, 68 sont propres à déterminer les positions des gouvernes en fonctions des mesures réceptionnées. Les positions des gouvernes ainsi déterminées sont les positions réelles des gouvernes par opposition aux positions des gouvernes demandées transmises du calcul de position des gouvernes 6 vers la commande d'actionneurs 8. Les positions des gouvernes ainsi déterminées sont appelées ci-après positions réelles des gouvernes. Les calculateurs de surveillance 70, 72, 74 vérifient l'intégrité des calculs réalisés par les calculateurs de commande 64, 66, 68 en ce qui concerne les positions réelles des gouvernes.

Les calculateurs de commande 64, 66, 68 sont aptes à encoder les positions réelles des gouvernes et à les transmettre aux calculateurs de commande 40, 42, 44 et aux calculateurs de surveillance 46, 48, 50 du calcul de position des gouvernes 6.

Les calculateurs de commande 40, 42, 44 et les calculateurs de surveillance 46, 48, 50 du calcul de position des gouvernes 6 sont propres à calculer des commandes d'effort en comparant les positions réelles des gouvernes aux positions des gouvernes demandées pour obtenir les trajectoires de vol. Les calculateurs de commande 40, 42, 44 sont aptes à encoder les commandes d'efforts et à les transmettre aux calculateur de commande 16, 18, 20 et aux calculateurs de surveillance 22, 24, 26 de la commande de pilotage 4.

Les calculateurs de commande 16, 18, 20 de la commande de pilotage 4 sont aptes à établir des commandes selon trois axes en fonction des commandes d'effort et à transmettre ces commandes selon trois axes à trois moteurs non représentés.

Le système de commande selon l'invention comporte des liaisons de communications unidirectionnelles permettant le transfert des données de la commande d'actionneurs 8 vers le calcul de position des gouvernes 6 et du calcul de position des gouvernes 6 vers la commande de pilotage 4. Ces liaisons de communication sont représentées sur la figure 4. Le maillage de ces liaisons de communication, ainsi que le mode de fonctionnement des calculateurs de commande et de surveillance sont identiques à ceux décrits précédemment pour la communication en sens opposé à savoir de la commande de pilotage 4 vers le calcul de position des gouvernes 6, et du calcul de position des gouvernes 6 vers la commande d'actionneurs. Ils ne seront pas décrits une seconde fois. Seules les liaisons de communication sont décrites ci-dessous. Comme le sens de communication des données est inversé. Les sorties des calculateurs sont appelées dans la description ci-après entrées et les entrées sont appelées ci-après des sorties.

En particulier, le calculateur de commande 64 du premier étage de la commande d'actionneurs est connecté au calculateur de commande 40 du premier étage du calcul de position des gouvernes par une unique liaison de communication unidirectionnelle appelée, première liaison principale de retour d'actionneurs 194.

La première liaison principale de retour d'actionneurs 194 est propre à transporter les positions réelles des gouvernes du calculateur de commande 64 au calculateur de commande 40.

Le calculateur de surveillance 70 du premier étage de la commande d'actionneurs est raccordé à la première liaison principale de retour d'actionneurs 194 par une liaison de commandes 196 à un point de raccordement ; ledit point de raccordement étant situé entre la fin de la chaîne de calcul, de traitement et d'encodage des données et la sortie du calculateur de commande 64 du premier étage de la commande d'actionneurs.

L'unité d'encodage 82 est apte à décoder les positions réelles des gouvernes réceptionnées par le calculateur de surveillance 70, via la liaison de commandes 196. Le calculateur de surveillance 70 est apte à vérifier l'intégrité des positions réelles des gouvernes décodées par l'unité d'encodage 82. Si les positions réelles des gouvernes décodées sont différentes des positions réelles des gouvernes transmises par le calculateur de commande 64 avant codage par la liaison de communication 75, alors le calculateur de commande 64 et le calculateur de surveillance 70 du premier étage de la commande d'actionneurs se mettent en défaut et sont relayés par le calculateur de commande 66 et le calculateur de surveillance 72 du deuxième étage de la commande d'actionneurs.

Tout comme pour la communication en sens inverse, la liaison de commandes 196, l'unité d'encodage 82 et le calculateur de surveillance 70 du premier étage de la commande d'actionneurs permettent de vérifier les positions réelles des gouvernes sous un format tel que transmis au calcul de position des gouvernes de sorte que toute la chaine de calcul et de traitement des données du calculateur de commande 64 est vérifiée, y compris la partie encodage.

Le calculateur de surveillance 46 du premier étage du calcul de position des gouvernes 6 est raccordé à la première liaison principale de retour d'actionneurs 194, par une liaison de commandes 198, à un point de raccordement ; ledit point de raccordement étant situé à un emplacement proche de l'entrée du calculateur de commande 40.

Avantageusement, un seul câble, i.e. la première liaison principale unidirectionnelle de retour d'actionneurs, s'étend dans l'aéronef entre le boîtier 77 contenant le premier étage de la commande d'actionneurs et le boîtier 49 contenant le premier étage du calcul de position des gouvernes et non deux câbles 116, 118 comme dans le système de commandes de l'état de la technique.

L'unité d'encodage 58 décode les positions réelles des gouvernes réceptionnées par l'intermédiaire de la liaison de commandes 198. Le calculateur de surveillance 46 du premier étage du calcul de position des gouvernes utilise les positions réelles des gouvernes décodées par l'unité d'encodage 58 pour calculer les commandes d'effort et vérifier les calculs réalisés par le calculateur de commande 40 du premier étage du calcul de position des gouvernes .

Le calculateur de commande 64 du premier étage de la commande d'actionneurs est connecté au calculateur de commande 42 du deuxième étage du calcul de position des gouvernes par une unique liaison de commandes unidirectionnelle, appelée première liaison auxiliaire de retour d'actionneurs 200. Le calculateur de surveillance 48 du deuxième étage du calcul de position des gouvernes est raccordé à la première liaison auxiliaire de retour d'actionneurs 200 par l'intermédiaire d'une liaison de commandes 202 raccordée à un point de raccordement ; ledit point de raccordement étant situé proche de l'entrée du calculateur de commande 42 du deuxième étage du calcul de position des gouvernes.

Le calculateur de commande 64 est propre à transmettre les positions des gouvernes encodées au calculateur de commande 42 et au calculateur de surveillance 48 du deuxième étage du calcul de position des gouvernes par l'intermédiaire de la première liaison auxiliaire de retour d'actionneurs 200.

De la même façon, le calculateur de commande 64 du premier étage de la commande d'actionneurs est connecté au calculateur de commande 44 du troisième étage du calcul de position des gouvernes par l'intermédiaire d'une liaison de commandes unidirectionnelle, appelée première liaison de secours de retour d'actionneurs 204. Le calculateur de surveillance 50 du troisième étage du calcul de position des gouvernes est raccordé à la première liaison de secours de retour d'actionneurs 204, par une liaison de commandes 206 raccordée à un point de raccordement ; ledit point de raccordement étant situé à un emplacement proche de l'entrée du calculateur de commande 44 du troisième étage du calcul de position des gouvernes.

Le calculateur de commande 64 est propre à transmettre les positions réelles des gouvernes encodées au calculateur de commande 44 et au calculateur de surveillance 50 du troisième étage du calcul de position des gouvernes par l'intermédiaire de la première liaison de secours de retour d'actionneurs 204.

Le schéma de connexion et le mode de fonctionnement décrits ci-dessus sont également utilisés pour les calculateurs de commande et de surveillance du deuxième étage et du troisième étage de la commande d'actionneurs et ne seront pas décrites à nouveau. Seules les liaisons entre ceux-ci sont décrites ci-dessous.

Le calculateur de commande 66 du deuxième étage de la commande d'actionneurs est connecté au calculateur de commande 42 du deuxième étage du calcul de position des gouvernes par une unique liaison de commandes unidirectionnelle, dite deuxième liaison principale de retour d'actionneurs 208. Le calculateur de surveillance 48 du deuxième étage du calcul de position des gouvernes est raccordé à la deuxième liaison principale de retour d'actionneurs 208, par une liaison de commandes 210 raccordée à un point de raccordement ; ledit point de raccordement étant situé proche de l'entrée du calculateur de commande 42 du deuxième étage du calcul de position des gouvernes. Le calculateur de surveillance 72 du deuxième étage de la commande d'actionneurs est relié à la deuxième liaison principale de retour d'actionneurs 208, par une liaison de commandes 220, à un point de raccordement ; ledit point ne raccordement étant proche de l'entrée du calculateur de commande 66 du deuxième étage de la commande d'actionneurs.

Le calculateur de commande 66 du deuxième étage de la commande d'actionneurs est raccordé au calculateur de commande 44 du troisième étage du calcul de position des gouvernes par une unique liaison de commandes unidirectionnelle, dite deuxième liaison auxiliaire de retour d'actionneurs 212.

Le calculateur de surveillance 50 du troisième étage du calcul de position des gouvernes est raccordé à la deuxième liaison auxiliaire de retour d'actionneurs 212, par une liaison de commandes 214 raccordée à un point de raccordement ; ledit point de raccordement étant situé proche de l'entrée du calculateur de commande 44 du troisième étage du calcul de position des gouvernes.

Le calculateur de commande 66 du deuxième étage de la commande d'actionneurs est relié au calculateur de commande 40 du premier étage du calcul de position des gouvernes par une unique liaison de commandes unidirectionnelle, dite deuxième liaison de secours de retour d'actionneurs 216.

Le calculateur de surveillance 46 du premier étage du calcul de position des gouvernes est raccordé à la deuxième liaison de secours de retour d'actionneurs 216 par une liaison de commandes 218 raccordée à un point de raccordement ; ledit point de raccordement étant situé proche de l'entrée du calculateur de commande 40 du premier étage du calcul de position des gouvernes.

Le calculateur de commande 68 du troisième étage de la commande d'actionneurs est connecté au calculateur de commande 44 du troisième étage du calcul de position des gouvernes par une unique liaison de commandes unidirectionnelle dite troisième liaison principale de retour d'actionneurs 222.

Le calculateur de surveillance 50 du troisième étage du calcul de position des gouvernes est raccordé à la troisième liaison principale de retour d'actionneurs 222, par une liaison de commandes 224, raccordée à un point de raccordement ; ledit point de raccordement étant situé proche de l'entrée du calculateur de commande 44 du troisième étage du calcul de position des gouvernes.

Le calculateur de surveillance 74 du troisième étage de la commande d'actionneurs est raccordé à la troisième liaison principale de retour d'actionneurs 222, par une liaison de commandes 226, à un point de raccordement proche de l'entrée du calculateur de commande 68.

Le calculateur de commande 68 du troisième étage de la commande d'actionneurs est raccordé au calculateur de commande 40 du premier étage du calcul de position des gouvernes par l'intermédiaire d'une unique liaison de commandes unidirectionnelle, dite troisième liaison auxiliaire de retour d'actionneurs 228. Le calculateur de surveillance 46 du premier étage du calcul de position des gouvernes est raccordé à la troisième liaison auxiliaire de retour d'actionneurs 228, par l'intermédiaire d'une liaison de commandes 230 raccordée à un point de raccordement ; ledit point de raccordement étant situé proche de l'entrée du calculateur de commande 40 du premier étage du calcul de position des gouvernes.

Le calculateur de commande 68 du troisième étage de la commande d'actionneurs est raccordé au calculateur de commande 42 du deuxième étage du calcul de position des gouvernes par l'intermédiaire d'une unique liaison de commandes unidirectionnelle, dite troisième liaison de secours de retour d'actionneurs 232. Le calculateur de surveillance 48 du deuxième étage du calcul de position des gouvernes est raccordé à la troisième liaison de secours de retour d'actionneurs 232, par l'intermédiaire d'une liaison de commandes 234 raccordée à un point de raccordement ; ledit point de raccordement étant situé proche de l'entrée du calculateur de commande 42 du premier étage du calcul de position des gouvernes.

Les calculateurs de commande 64, 66, 68 du premier, deuxième et troisième étages de la commande d'actionneurs sont propres à transmettre les positions réelles des gouvernes encodées aux calculateurs de commande 40, 42, 44 et aux calculateurs de surveillance 46, 48, 50 des premier, deuxième et troisième étages de la commande d'actionneurs, par l'intermédiaire des liaisons de commandes unidirectionnelles 194 à 234.

Les liaisons de communication permettant le transfert de données du calcul de position des gouvernes vers la commande de pilotages vont à présent être décrites.

Le calculateur de commande 40 du premier étage du calcul de position des gouvernes est relié au calculateur de commande 16 du premier étage de la commande de pilotage par une unique liaison de communication unidirectionnelle, dite première liaison de retour d'effort 236.

Le calculateur de surveillance 46 du premier étage du calcul de position des gouvernes est raccordé à la première liaison de retour d'effort 236 par une liaison de commandes 238 à un point de raccordement ; ledit point de raccordement étant situé entre la fin de la chaîne de calcul, de traitement et d'encodage des données et la sortie du calculateur de commande 40 du premier étage du calcul de position des gouvernes.

L'unité d'encodage 58 est apte à décoder les commandes d'effort réceptionnées par le calculateur de surveillance 46, via la liaison de commandes 238. Le calculateur de surveillance 46 est apte à vérifier l'intégrité des commandes d'effort décodées par l'unité d'encodage 58. Si les commandes d'effort décodées sont différentes des commandes d'effort transmises par le calculateur de commande 40 avant codage par la liaison de communication 51, alors le calculateur de commande 40 et le calculateur de surveillance 46 du premier étage du calcul de position des gouvernes se mettent en défaut et sont relayés par le calculateur de commande 42 et le calculateur de surveillance 48 du deuxième étage 12 du calcul de position des gouvernes.

Les calculateurs de surveillance 22, 24, 26 du premier, du deuxième et du troisième étages de la commande de pilotage et les calculateurs de commande 18, 20 du deuxième et du troisième étages de la commande de pilotages sont raccordés à la première liaison de retour d'effort 236 par une liaison de commandes 240 qui s'étend à l'intérieur du manche 9 entre l'ensemble des cartes de circuit imprimées du manche

Le calculateur de commande 40 est apte à transférer les commandes d'effort aux calculateurs de commande 16, 18, 20 et aux calculateurs de surveillance 22, 24, 26 de la commande de pilotage.

Le calculateur de commande 42 du deuxième étage du calcul de position des gouvernes est relié au calculateur de commande 18 du deuxième étage de la commande de pilotage par une unique liaison de communication unidirectionnelle, dite deuxième liaison de retour d'effort 242.

Le calculateur de surveillance 48 du deuxième étage du calcul de position des gouvernes est raccordé à la deuxième liaison de retour d'effort 242 par une liaison de commandes 244 à un point de raccordement ; ledit point de raccordement étant situé entre la fin de la chaîne de calcul, de traitement et d'encodage des données et la sortie du calculateur de commande 42 du deuxième étage du calcul de position des gouvernes.

Le calculateur de surveillance 48 est apte à vérifier l'intégrité des commandes d'effort décodées par l'unité d'encodage 60.

Les calculateurs de surveillance 22, 24, 26 du premier, du deuxième et du troisième étages de la commande de pilotage et les calculateurs de commande 20, 16 du deuxième et du premier étages de la commande de pilotages sont raccordés à la deuxième liaison de retour d'effort 242 par une liaison de commandes 246 qui s'étend à l'intérieur du manche 9 entre l'ensemble des cartes de circuit imprimées du manche

Le calculateur de commande 42 est apte à transférer les commandes d'effort aux calculateurs de commande 16, 18, 20 et aux calculateurs de surveillance 22, 24, 26 de la commande de pilotage.

Le calculateur de commande 44 du troisième étage du calcul de position des gouvernes est relié au calculateur de commande 20 du troisième étage de la commande de pilotage par une unique liaison de communication unidirectionnelle, dite troisième liaison de retour d'effort 248.

Le calculateur de surveillance 50 du troisième étage du calcul de position des gouvernes est raccordé à la troisième liaison de retour d'effort 248 par une liaison de commandes 250 à un point de raccordement ; ledit point de raccordement étant situé entre la fin de la chaîne de calcul, de traitement et d'encodage des données et la sortie du calculateur de commande 44 du troisième étage du calcul de position des gouvernes.

Le calculateur de surveillance 50 est apte à vérifier l'intégrité des commandes d'effort décodées par l'unité d'encodage 62.

Les calculateurs de surveillance 22, 24, 26 du premier, du deuxième et du troisième étages de la commande de pilotage et les calculateurs de commande 16, 18 du premier et du deuxième étages de la commande de pilotages sont raccordés à la troisième liaison de retour d'effort par une liaison de commandes 252 qui s'étend à l'intérieur du manche 9 entre l'ensemble des cartes de circuit imprimées du manche

Le calculateur de commande 44 est apte à transférer les commandes d'effort aux calculateurs de commande 16, 18, 20 et aux calculateurs de surveillance 22, 24, 26 de la commande de pilotage.

## Revendications

1. Système de commande (2) de vol électrique pour aéronef comportant des gouvernes aérodynamiques et un manche (9) pour piloter lesdites gouvernes aérodynamiques ; ledit système de commande (2) comportant :
- une commande de pilotage (4) comportant un premier étage (10) et un deuxième étage (12) comprenant chacun :
• un calculateur de commande (16, 18) propre à déterminer les positions du manche, ledit calculateur de commande (16, 18) comporte une unité d'encodage (28, 30) propre à générer des positions du manche encodées, et
• un calculateur de surveillance (22, 24) apte à vérifier l'intégrité des positions du manche déterminées par le calculateur de commande (16, 18) ;
- un calcul de position des gouvernes (6) comportant un premier étage (10) et un deuxième étage (14) comprenant chacun :
• un calculateur de commande (40, 42) propre à calculer des positions des gouvernes là partir des positions du manche encodées, et
• un calculateur de surveillance (46, 48) apte à vérifier l'intégrité des positions des gouvernes calculées par le calculateur de commande (40, 42) ;
- une liaison unidirectionnelle de commandes de pilotage, dite première liaison principale de pilotage (88), connectant le calculateur de commande (16) du premier étage de la commande de pilotage au calculateur de commande (40) du premier étage du calcul de position des gouvernes ;
- une liaison unidirectionnelle de commandes de pilotage, dite deuxième liaison principale de pilotage (132), connectant le calculateur de commande (18) du deuxième étage de la commande de pilotage au calculateur de commande (42) du deuxième étage du calcul de positions des gouvernes ;
**caractérisé en ce que** la commande de pilotage (4) comporte un troisième étage (14) comprenant :
• un calculateur de commande (20) propre à déterminer les positions du manche et, ledit calculateur de commande (20) comporte une unité d'encodage (32) propre à générer des positions du manche encodées,
• un calculateur de surveillance (26) apte à vérifier l'intégrité des positions du manche déterminées par le calculateur de commande (20) ;
et **en ce que** le calcul de position des gouvernes (6) comporte un troisième étage (14) comprenant :
• un calculateur de commande (44) propre à calculer des positions de gouvernes à partir des positions du manche encodées, et
• un calculateur de surveillance (50) apte à vérifier l'intégrité des positions de gouvernes calculées par le calculateur de commande (44) ;
et **en ce que** le système de commande (2) comporte une liaison unidirectionnelle de commandes de pilotage, dite troisième liaison principale de pilotage (142), connectant le calculateur de commande (20) du troisième étage de la commande de pilotage au calculateur de commande (44) du troisième étage du calcul de position des gouvernes ;
et **en ce que** la première liaison principale de pilotage (88) est l'unique liaison de commandes propre à transmettre les positions du manche encodées du calculateur de commande (16) du premier étage de la commande de pilotage au calculateur de commande (40) du premier étage du calcul de position des gouvernes ;
la deuxième liaison principale de pilotage (132) étant l'unique liaison de commandes propre à transmettre les positions du manche encodées du calculateur de commande (18) du deuxième étage de la commande de pilotage au calculateur de commande (20) du deuxième étage du calcul de position des gouvernes ;
la troisième liaison principale de pilotage (142) étant l'unique liaison de commandes propre à transmettre les positions du manche encodées du calculateur de commande (20) du troisième étage de la commande de pilotage au calculateur de commande (44) du troisième étage du calcul de position des gouvernes ;
le calculateur de surveillance (46) du premier étage, le calculateurs de surveillance (48) du deuxième étage et le calculateur de surveillance (50) du troisième étage du calcul de position des gouvernes étant connectés à ladite première (88), deuxième (132) et respectivement troisième (142) liaisons principales de pilotage, par l'intermédiaire de liaisons de commandes (90, 133, 144) ;
et **en ce que** les calculateurs de surveillance (22, 24, 26) de la commande de pilotage comportent chacun une unité d'encodage (34, 36, 38) propre à décoder les positions du manche encodées ; les calculateurs de surveillance (22, 24, 26) du premier étage, du deuxième étage et du troisième étage de la commande de pilotage étant connectées à ladite première (88), deuxième (132) et respectivement troisième (142) liaisons principales de pilotage par l'intermédiaire de liaisons de commandes (92, 135, 143) ; les calculateurs de surveillance (22, 24, 26) de la commande de pilotage étant propres à vérifier l'intégrité des positions du manche décodées par lesdites unités d'encodage (34, 36, 38).

2. Système de commande (2) selon la revendication 1, **caractérisé en ce que** les unités d'encodage (28, 30, 32) des calculateurs de commande de la commande de pilotage et les unités d'encodage (34, 36, 38) des calculateurs de surveillance de la commande de pilotage sont propres à mettre en œuvre un premier contrôle de redondance cyclique sur un premier paquet de données (P1) représentatives desdites positions du manche et un second contrôle de redondance cyclique sur un second paquet de données (P2) représentatives desdites positions du manche; ledit second paquet de données comprenant plusieurs premiers paquets de données (P1).

3. Système de commande (2) selon l'une quelconque des revendications 1 et 2, **caractérisé en ce qu'**il comporte :
• une unique liaison de commandes unidirectionnelle de pilotage, dite première liaison auxiliaire de pilotage (94), propre à transmettre les positions du manche encodées du calculateur de commande (16) du premier étage de la commande de pilotage au calculateur de commande (42) du deuxième étage du calcul de position des gouvernes ;
• une unique liaison de commandes unidirectionnelle de pilotage, dite première liaison de pilotage de secours (98), propre à transmettre les positions du manche encodées du calculateur de commande (16) du premier étage de la commande de pilotage au calculateur de commande (44) du troisième étage du calcul de position des gouvernes.

4. Système commande (2) selon la revendication 3, **caractérisé en ce que** le calculateur de surveillance (48) du deuxième étage et le calculateur de surveillance (50) du troisième étage du calcul de position des gouvernes sont connectés à ladite première liaison auxiliaire de pilotage (94) et respectivement à ladite première liaison de pilotage de secours(98), par des liaisons de commandes (96, 130).

5. Système commande (2) selon l'une quelconque des revendications 1 à 4, **caractérisé en ce qu'**il comporte :
• une unique liaison de commandes unidirectionnelle de pilotage, dite deuxième liaison auxiliaire de pilotage (134), propre à transmettre les positions du manche encodées du calculateur de commande (18) du deuxième étage de la commande de pilotage au calculateur de commande (44) du troisième étage du calcul de position des gouvernes ;
• une unique liaison de commandes unidirectionnelle de pilotage, dite deuxième liaison de pilotage de secours (138), propre à transmettre les positions du manche encodées du calculateur de commande (18) du deuxième étage de la commande de pilotage au calculateur de commande (40) du premier étage du calcul de position des gouvernes.

6. Système de commande (2) selon la revendication 5, **caractérisé en ce que** le calculateur de surveillance (50) du troisième étage et le calculateur de surveillance (46) du premier étage du calcul de position des gouvernes sont connectés à ladite deuxième liaison auxiliaire de pilotage (134) et respectivement à ladite deuxième liaison de pilotage de secours (138), par des liaisons de commandes (136, 140).

7. Système de commande (2) selon l'une quelconque des revendications 1 à 6, **caractérisé en ce qu'**il comporte :
• une unique liaison de commandes unidirectionnelle de pilotage, dite troisième liaison auxiliaire de pilotage (146), propre à transmettre les positions du manche encodées du calculateur de commande (20) du troisième étage de la commande de pilotage au calculateur de commande (40) du premier étage du calcul de position des gouvernes ;
• une unique liaison de commandes unidirectionnelle de pilotage, dite troisième liaison de pilotage de secours (150), propre à transmettre les positions du manche encodées du calculateur de commande (20) du troisième étage de la commande de pilotage au calculateur de commande (40) du deuxième étage du calcul de position des gouvernes.

8. Système de commande (2) selon la revendication 7, **caractérisée en ce que** le calculateur de surveillance (46) du premier étage et le calculateur de surveillance (48) du deuxième étage du calcul de position des gouvernes sont connectés à ladite troisième liaison auxiliaire de pilotage (146) et respectivement à ladite troisième liaison de pilotage de secours (150), par des liaisons de commandes (148,152).

9. Système de commande (2) selon l'une quelconque des revendications 1 à 8, **caractérisé en ce que** le calcul de position des gouvernes (6) est propre à réceptionner des positions réelles de gouvernes, au moins un calculateur de commande (40, 42, 44) et un calculateur de surveillance (46, 48, 50) du calcul de position des gouvernes étant propre à calculer des commandes d'effort en fonction des positions réelles des gouvernes réceptionnées, et **en ce que** le système de commande (2) comporte :
- une unique liaison de commandes unidirectionnelle de retour d'effort, dite première liaison de retour d'effort (236), propre à transmettre lesdites commandes d'effort du calculateur de commande (40) du premier étage du calcul de position des gouvernes au calculateur de commande (16) du premier étage de la commande de pilotage ;
- une unique liaison de commandes unidirectionnelle de retour d'effort, dite deuxième liaison de retour d'effort (242), propre à transmettre lesdites commandes d'effort du calculateur de commande (42) du deuxième étage du calcul de position des gouvernes au calculateur de commande (18) du deuxième étage de la commande de pilotage ;
- une unique liaison de commandes unidirectionnelle de retour d'effort, dite troisième liaison de retour d'effort (248), propre à transmettre lesdites commandes d'effort du calculateur de commande (44) du troisième étage du calcul de position des gouvernes au calculateur de commande (20) du troisième étage de la commande de pilotage.

10. Système de commande (2) selon la revendication 9, **caractérisé en ce que** les calculateurs de commande (40, 42, 44) du calcul de position des gouvernes comporte chacun une unité d'encodage (52, 54, 56) pour encoder les commandes d'effort, et **en ce que** lesdits calculateurs de surveillance (46, 48, 50) du calcul de position des gouvernes comporte chacun une unité d'encodage (58, 60, 62) propre à décoder les commandes d'effort encodées ; lesdites unités d'encodage (58, 60, 62) des calculateurs de surveillance du premier étage, du deuxième étage et du troisième étage du calcul de position des gouvernes étant connectées à ladite première (236), deuxième (242) et respectivement troisième (248) liaisons de retour d'effort par l'intermédiaire de liaisons de commandes (238, 244, 250) ; lesdits calculateurs de surveillance (46, 48, 50) du calcul de position des gouvernes étant propres à vérifier l'intégrité des commandes d'effort décodées par lesdites unités d'encodage.

11. Système de commande (2) selon l'une quelconque des revendications 9 et 10, **caractérisé en ce que** le calculateur de surveillance (22) du premier étage de la commande de pilotage, le calculateur de commande (18) et le calculateur de surveillance (24) du deuxième étage de la commande de pilotage, le calculateur de commande (20) et le calculateur de surveillance (26) du troisième étage de la commande de pilotage sont chacun connectés à ladite première liaison de retour d'effort (236) par l'intermédiaire de liaisons de commandes (240) ;
le calculateur de surveillance (24) du deuxième étage de la commande de pilotage, le calculateur de commande (16) et le calculateur de surveillance (22) du premier étage de la commande de pilotage, le calculateur de commande (20) et le calculateur de surveillance (26) du troisième étage de la commande de pilotage sont chacun connectés à ladite deuxième liaison de retour d'effort (242) par l'intermédiaire de liaisons de commandes (246) ;
le calculateur de surveillance (26) du troisième étage de la commande de pilotage, le calculateur de commande (16) et le calculateur de surveillance (22) du premier étage de la commande de pilotage, le calculateur de commande (18) et le calculateur de surveillance (24) du deuxième étage de la commande de pilotage sont chacun connectés à ladite troisième liaison de retour d'effort (248) par l'intermédiaire de liaisons de commandes (252).

12. Système de commande (2) de vol électrique pour aéronef comportant des gouvernes aérodynamiques, des actionneurs aptes à entrainer lesdites gouvernes aérodynamiques en fonction d'instructions d'entraînement, un manche (9) propre à être déplacé pour piloter l'entrainement desdites gouvernes aérodynamiques, le système de commandes (2) comprenant :
- un calcul de position des gouvernes (6) comportant un premier étage (10) et un deuxième étage (12) comprenant chacun :
• un calculateur de commande (40, 42) propre à réceptionner des positions du manche et à calculer des positions des gouvernes à partir des positions du manche, ledit calculateur de commande (40, 42) comporte une unité d'encodage (52, 54) propre à générer des positions des gouvernes encodées, et
• un calculateur de surveillance (46, 48) apte à vérifier l'intégrité des positions des gouvernes calculées par le calculateur de commande (40, 42);
- une commande d'actionneurs (8) comportant un premier étage (10) et un deuxième étage (12) comprenant chacun :
• un calculateur de commande (64, 66) propre à déterminer des instructions d'entrainement des actionneurs de gouvernes aérodynamiques à partir des positions des gouvernes, et
• un calculateur de surveillance (70, 72) apte à vérifier l'intégrité des instructions d'entraînement déterminées par ledit calculateur de commande (64, 66) ;
- une liaison de commandes unidirectionnelle de position des gouvernes, dite première liaison principale de commandes (154), connectant le calculateur de commande (40) du premier étage du calcul de position des gouvernes au calculateur de commande (64) du premier étage de la commande d'actionneurs ;
- une liaison de commandes unidirectionnelle de positions des gouvernes, dite deuxième liaison principale de commandes (166), connectant le calculateur de commande (42) du deuxième étage du calcul de position des gouvernes au calculateur de commande (66) du deuxième étage de la commande d'actionneurs ;
**caractérisé en ce que** le calcul de position des gouvernes comporte un troisième étage (14) comprenant :
• un calculateur de commande (44) propre à réceptionner des positions du manche et à calculer des positions des gouvernes à partir des positions du manche, ledit calculateur de commande (44) comporte une unité d'encodage (56) propre à générer des positions des gouvernes encodées ;
• un calculateur de surveillance (50) apte à vérifier l'intégrité des positions des gouvernes calculées par le calculateur de commande (44) ;
et **en ce que** la commande d'actionneurs (8) comporte un troisième étage (14) comportant:
• un calculateur de commande (68) propre à calculer des instructions d'entraînement à partir des positions des gouvernes encodées, et
• un calculateur de surveillance (74) apte à vérifier l'intégrité des instructions d'entraînement calculées par le calculateur de commande ;
et **en ce que** le système de commande (2) comporte :
• une liaison de commandes unidirectionnelle de positions des gouvernes , dite troisième liaison principale de commandes (180), connectant le calculateur de commande (44) du troisième étage du calcul de positions des gouvernes au calculateur de commande (74) du troisième étage de la commande d'actionneurs ; et **en ce que** la première liaison principale de commandes (154) est l'unique liaison
de commandes propre à transmettre les positions des gouvernes encodées du calculateur de commande (40) du premier étage du calcul de position des gouvernes au calculateur de commande (64) du premier étage de la commande d'actionneurs ;
la deuxième liaison principale de commandes (166) étant l'unique liaison de commandes propre à transmettre les positions des gouvernes encodées du calculateur de commande (42) du deuxième étage du calcul de position des gouvernes au calculateur de commande (66) du deuxième étage de la commande d'actionneurs ;
la troisième liaison principale de commandes (180) est l'unique liaison de commandes propre à transmettre les positions des gouvernes encodées du calculateur de commande (44) du troisième étage du calcul de position des gouvernes au calculateur de commande (74) du troisième étage de la commande d'actionneurs ;
les calculateurs de surveillance (46, 48, 50) du premier étage, du deuxième étage et du troisième étage du calcul de position des gouvernes étant chacun connectés à ladite première (154), deuxième (166) et respectivement troisième (180) liaisons de commandes, par l'intermédiaire de liaisons de commandes (165, 178, 192) pour réceptionner les positions des gouvernes encodées ;
les calculateurs de surveillance (46, 48, 50) du calcul de position des gouvernes comportant chacun une unité d'encodage (58, 60, 62) propre à décoder les positions des gouvernes encodées ; les calculateurs de surveillance (46, 48, 50) du calcul de position des gouvernes étant propres à vérifier l'intégrité des positions des gouvernes décodées par lesdites unités d'encodage (58, 60, 62).

13. Système de commande (2) selon la revendication 12, **caractérisé en ce que** les unités d'encodage (52, 54, 56) du calculateur de commande du calcul de position des gouvernes et les unités d'encodage (58, 60, 62) du calculateur de surveillance de la commande d'actionneurs sont propres à mettre en œuvre un premier contrôle de redondance cyclique sur un premier paquet de données (P1) représentatives desdites positions du manche et un second contrôle de redondance cyclique sur un second paquet de données (P2) représentatives desdites positions du manche; ledit second paquet de données (P2) comprenant plusieurs premiers paquets de données (P1).

14. Système de commande (2) selon l'une quelconque des revendications 12 à 13, **caractérisé en ce que** qu'il comporte :
• une unique liaison de commandes unidirectionnelle, dite première liaison auxiliaire de commandes (158), propre à transmettre les positions des gouvernes encodées du calculateur de commande (40) du premier étage du calcul de position des gouvernes au calculateur de commande (66) du deuxième étage de la commande d'actionneurs ;
• une unique liaison de commandes unidirectionnelle, dite première liaison de commandes de secours (162), propre à transmettre les positions des gouvernes encodées du calculateur de commande (40) du premier étage du calcul de position des gouvernes au calculateur de commande (68) du troisième étage de la commande d'actionneurs.

15. Système de commande (2) selon la revendication 14, **caractérisé en ce que** le calculateur de surveillance (48) du deuxième étage et le calculateur de surveillance (50) du troisième étage de la commande d'actionneurs sont connectés à ladite première liaison auxiliaire de commandes (158) et respectivement à ladite première liaison de commandes de secours (162), par l'intermédiaire de liaisons de commandes (160, 164).

16. Système de commande (2) selon l'une quelconque des revendications 12 à 15, **caractérisé en ce qu'**il comporte :
• une unique liaison de commandes unidirectionnelle, dite deuxième liaison auxiliaire de commandes (170), propre à transmettre les positions des gouvernes encodées du calculateur de commande (42) du deuxième étage du calcul de position des gouvernes au calculateur de commande (74) du troisième étage de la commande d'actionneurs ;
• une unique liaison de commandes unidirectionnelle, dite deuxième liaison de commandes de secours (174), propre à transmettre les positions des gouvernes encodées du calculateur de commande (42) du deuxième étage du calcul de position des gouvernes au calculateur de commande (64) du premier étage de la commande d'actionneurs.

17. Système de commande (2) selon la revendication 16, **caractérisé en ce que** le calculateur de surveillance (74) du troisième étage et le calculateur de surveillance (70) du premier étage de la commande d'actionneurs sont connectés à ladite deuxième liaison auxiliaire de commandes (170) et respectivement à ladite deuxième liaison de commandes de secours (174) par l'intermédiaire de liaison de commandes (172, 176).

18. Système commande (2) selon l'une quelconque des revendications 12 à 17, **caractérisé en ce qu'**il comporte :
• une unique liaison de commandes unidirectionnelle, dite troisième liaison auxiliaire de commandes (184), propre à transmettre les positions des gouvernes encodées du calculateur de commande (44) du troisième étage du calcul de position des gouvernes au calculateur de commande (64) du premier étage de la commande d'actionneurs ;
• une unique liaison de commandes unidirectionnelle, dite troisième liaison de commandes de secours (188), propre à transmettre les positions des gouvernes encodées du calculateur de commande (44) du troisième étage du calcul de position des gouvernes au calculateur de commande (66) du deuxième étage de la commande d'actionneurs.

19. Système de commande (2) selon la revendication 18, **caractérisé en ce que** le calculateur de surveillance (70) du premier étage et le calculateur de surveillance (72) du deuxième étage de la commande d'actionneurs sont connectée à ladite troisième liaison auxiliaire de commandes (184) et respectivement à ladite troisième liaison de commandes de secours (188), par l'intermédiaire de liaisons de commandes (186, 190).

20. Système de commande (2) selon l'une quelconque des revendications 12 à 19, **caractérisé en ce que** les calculateurs de commande (64, 66, 68) et les calculateurs de surveillance (70, 72, 74) du premier, deuxième et troisième étages de la commande d'actionneurs sont propres à déterminer des positions réelles des gouvernes, et **en ce que** le système de commande (2) comporte :
- une unique liaison de commandes unidirectionnelle de retour d'actionneurs, dite première liaison principale de retour d'actionneurs (194), propre à transmettre lesdites positions réelles des gouvernes du calculateur de commande (64) du premier étage de la commande d'actionneurs au calculateur de commande (40) du premier étage du calcul de position des gouvernes ;
- une unique liaison de commandes unidirectionnelle de retour d'actionneurs, dite deuxième liaison principale de retour d'actionneurs (208), propre à transmettre lesdites positions réelles des gouvernes du calculateur de commande (66) du deuxième étage du calcul de position des gouvernes au calculateur de commande (66) du deuxième étage de la commande d'actionneurs ;
- une unique liaison de commandes unidirectionnelle de retour d'actionneurs, dite troisième liaison principale de retour d'actionneurs (222), propre à transmettre lesdites positions réelles des gouvernes du calculateur de commande (68) du troisième étage de la commande d'actionneurs au calculateur de commande (44) du troisième étage du calcul de position des gouvernes.

21. Système de commande (2) selon la revendication 20, **caractérisé en ce que** les calculateurs de commande (64, 66, 68) de la commande d'actionneurs comportent chacun une unité d'encodage (76, 78, 80) propre à générer des positions des gouvernes encodées et **en ce que** les calculateurs de surveillance (70, 72, 74) du premier étage, du deuxième étage et du troisième étage de la commande d'actionneurs sont connectées à ladite première, deuxième et respectivement troisième liaisons principales de retour d'actionneurs (194, 208, 222) par l'intermédiaire de liaisons de commandes (196, 220, 226); les calculateurs de surveillance (70, 72, 74) de la commande d'actionneurs comportent chacun une unité d'encodage (82, 84, 86) propre à décoder les positions réelles des gouvernes encodées ; les calculateurs de surveillance (70, 72, 74) de la commande d'actionneurs étant propres à vérifier l'intégralité des positions réelles des gouvernes décodées par lesdites unités d'encodage (82, 84, 86).
commande d'actionneurs étant propres à vérifier l'intégrité des positions réelles des gouvernes décodées par lesdites unités d'encodage (82, 84, 86).

22. Système de commande (2) selon la revendication 19, **caractérisé en ce que** le calculateur de surveillance (46) du premier étage du calcul de position des gouvernes est connecté à ladite première liaison principale de retour d'actionneurs (194) par l'intermédiaire d'une liaison de commandes (198) ;
le calculateur de surveillance (48) du deuxième étage du calcul de position des gouvernes est connecté à ladite deuxième liaison principale de retour d'actionneurs (208) par l'intermédiaire d'une liaison de commandes (210) ;
le calculateur de surveillance (50) du troisième étage du calcul de position des gouvernes est connecté à ladite troisième liaison principale de retour d'actionneurs (222) par l'intermédiaire d'une liaison de commandes (224).

23. Système de commande (2) selon l'une quelconque des revendications 12 à 22, **caractérisé en ce qu'**il comporte :
• une unique liaison de commandes unidirectionnelle de retour d'actionneurs, dite première liaison auxiliaire de retour d'actionneurs (200), propre à transmettre les positions réelles des gouvernes encodées du calculateur de commande (64) du premier étage de la commande d'actionneurs au calculateur de commande (42) du deuxième étage du calcul de position des gouvernes ;
• une unique liaison de commandes unidirectionnelle de retour d'actionneurs, dite première liaison de secours de retour d'actionneurs (204), propre à transmettre les positions réelles des gouvernes encodées du calculateur de commande (64) du premier étage de la commande d'actionneurs au calculateur de commande (44) du troisième étage du calcul de positions des gouvernes.

24. Système de commande (2) selon la revendication 23, **caractérisé en ce que** le calculateur de surveillance (48) du deuxième étage et le calculateur de surveillance (50) du troisième étage du calcul de positions des gouvernes sont connectés à ladite première liaison auxiliaire de retour d'actionneurs (200) et respectivement à ladite première liaison de secours de retour d'actionneurs (204), par l'intermédiaire de liaisons de commandes (202, 206).

25. Système de commande (2) selon l'une quelconque des revendications 12 à 24, **caractérisé en ce qu'**il comporte :
• une unique liaison de commandes unidirectionnelle de retour d'actionneurs, dite deuxième liaison auxiliaire de retour d'actionneurs (212), propre à transmettre les positions réelles des gouvernes encodées du calculateur de commande (66) du deuxième étage de la commande d'actionneurs au calculateur de commande (44) du troisième étage du calcul de positions des gouvernes ;
• une unique liaison de commandes unidirectionnelle de retour d'actionneurs, dite deuxième liaison de retour d'actionneurs de secours (216), propre à transmettre les positions réelles des gouvernes encodées du calculateur de commande (66) du deuxième étage de la commande d'actionneurs au calculateur de commande (40) du premier étage du calcul de position des gouvernes.

26. Système commande (2) selon la revendication 25, **caractérisé en ce que** le calculateur de surveillance (50) du troisième étage et le calculateur de surveillance (46) du premier étage du calcul de position des gouvernes sont connectés à ladite deuxième liaison auxiliaire de retour d'actionneurs (212) et respectivement à ladite deuxième liaison de retour d'actionneurs de secours (216), par l'intermédiaire de liaisons de commandes (214, 218).

27. Système de commande (2) selon l'une quelconque des revendications 12 à 26, **caractérisé en ce qu'**il comporte :
• une unique liaison de commandes unidirectionnelle de retour d'actionneurs, dite troisième liaison auxiliaire de retour d'actionneurs (228), propre à transmettre les positions réelles des gouvernes encodées du calculateur de commande (68) du troisième étage de la commande d'actionneurs au calculateur de commande (40) du premier étage du calcul de position des gouvernes ;
• une unique liaison de commandes unidirectionnelle de retour d'actionneurs, dite troisième liaison de retour d'actionneurs de secours (232), propre à transmettre les positions réelles des gouvernes encodées du calculateur de commande (68) du troisième étage de la commande d'actionneurs au calculateur de commande (42) du deuxième étage du calcul de position des gouvernes.

28. Système de commande (2) selon la revendication 25, **caractérisée en ce que** le calculateur de surveillance (46) du premier étage et le calculateur de surveillance (48) du deuxième étage du calcul de positions des gouvernes sont connectés à ladite troisième liaison auxiliaire de retour d'actionneurs (228) et respectivement à ladite troisième liaison de retour d'actionneurs de secours (232), par l'intermédiaire de liaison de commandes (230, 234).

## Patentansprüche

1. Elektrisches Flugsteuerungssystem (2) für Flugzeuge, umfassend aerodynamische Steuerflächen und ein Steuerhorn (9) zum Steuern der aerodynamischen Steuerflächen, wobei das Steuerungssystem (2) umfasst:
- eine Flugsteuerung (4), die eine erste Stufe (10) und eine zweite Stufe aufweist, jeweils umfassend:
• einen Steuerungscomputer (16, 18), der dazu geeignet ist, die Positionen des Steuerhorns zu bestimmen, wobei der Steuerungscomputer (16, 18) eine Kodier-Einheit (28, 30) umfasst, die dazu geeignet ist, kodierte Steuerhornpositionen zu erzeugen,
• einen Überwachungscomputer (22, 24), der dazu in der Lage ist, die Integrität der von dem Steuerungscomputer (16, 18) ermittelten Steuerhornpositionen zu überprüfen;
- eine Positionsberechnung für die Steuerflächen (6), umfassend eine erste Stufe (10) und eine zweite Stufe (14), jeweils umfassend:
• einen Steuerungscomputer (40, 42), der dazu geeignet ist, Positionen der Steuerflächen aus den kodierten Steuerhornpositionen zu berechnen, und
• einen Überwachungscomputer (46, 48), der dazu geeignet ist, die Integrität der von dem Steuerungscomputer (40, 42) berechneten Positionen der Steuerflächen zu überprüfen;
- eine unidirektionale Flugsteuerungsverbindung, als erste Hauptflugsteuerungsverbindung (88) bezeichnet, die den Steuerungscomputer (16) der ersten Stufe der Flugsteuerung mit dem Steuerungscomputer (40) der ersten Stufe der Positionsberechnung für die Steuerflächen verbindet;
- eine unidirektionale Flugsteuerungsverbindung, als zweite Hauptflugsteuerungsverbindung (132) bezeichnet, die den Steuerungscomputer (18) der zweiten Stufe der Flugsteuerung mit dem Steuerungscomputer (42) der zweiten Stufe der Positionsberechnung für die Steuerflächen verbindet;
**dadurch gekennzeichnet, dass** die Flugsteuerung (4) eine dritte Stufe (14) aufweist, umfassend:
• einen Steuerungscomputer (20), der dazu geeignet ist, die Steuerhornpositionen zu bestimmen, und wobei der Steuerungscomputer (20) eine Kodier-Einheit (32) aufweist, die dazu geeignet ist, kodierte Steuerhornpositionen zu erzeugen,
• einen Überwachungscomputer (26), der dazu in der Lage ist, die Integrität der von dem Steuerungscomputer (20) bestimmten Steuerhornpositionen zu überprüfen;
und dass die Positionsberechnung für die Steuerflächen (6) eine dritte Stufe (14) aufweist, umfassend:
• einen Steuerungscomputer (44), der dazu geeignet ist, Positionen der Steuerflächen aus den kodierten Steuerhornpositionen zu berechnen, und
• einen Überwachungscomputer (50), der dazu in der Lage ist, die Integrität der von dem Steuerungscomputer (44) berechneten Positionen der Steuerflächen zu überprüfen;
und dass das Steuerungssystem (2) eine unidirektionale Flugsteuerungsverbindung aufweist, als dritte Hauptflugsteuerungsverbindung (142) bezeichnet, die den Steuerungscomputer (20) der dritten Stufe der Flugsteuerung mit dem Steuerungscomputer (44) der dritten Stufe der Positionsberechnung für die Steuerflächen verbindet;
und dass die erste Hauptflugsteuerungsverbindung (88) die einzige Steuerungsverbindung ist, die dazu geeignet ist, die kodierten Steuerhornpositionen von dem Steuerungscomputer (16) der ersten Stufe der Flugsteuerung zu dem Steuerungscomputer (40) der ersten Stufe der Positionsberechnung für die Steuerflächen zu übertragen;
wobei die zweite Hauptflugsteuerungsverbindung (132) die einzige Steuerungsverbindung ist, die dazu geeignet ist, die kodierten Steuerhornpositionen von dem Steuerungscomputer (18) der zweiten Stufe der Flugsteuerung zu dem Steuerungscomputer (20) der zweiten Stufe der Positionsberechnung für die Steuerflächen zu übertragen;
wobei die dritte Hauptflugsteuerungsverbindung (142) die einzige Steuerungsverbindung ist, die dazu geeignet ist, die kodierten Steuerhornpositionen von dem Steuerungscomputer (20) der dritten Stufe der Flugsteuerung zu dem Steuerungscomputer (44) der dritten Stufe der Positionsberechnung für die Steuerflächen zu übertragen;
wobei der Überwachungscomputer (46) der ersten Stufe, der Überwachungscomputer (48) der zweiten Stufe und der Überwachungscomputer (50) der dritten Stufe der Positionsberechnung für die Steuerflächen mit der ersten (88), zweiten (132) bzw. dritten (142) Hauptflugsteuerungsverbindung über Steuerungsverbindungen (90, 133, 144) verbunden sind;
und dass die Überwachungscomputer (22, 24, 26) der Flugsteuerung jeweils eine Kodier-Einheit (34, 36, 38) umfassen, die dazu geeignet ist, die kodierten Steuerhornpositionen zu dekodieren; wobei die Überwachungscomputer (22, 24, 26) der ersten Stufe, der zweiten Stufe und der dritten Stufe der Flugsteuerung jeweils mit der ersten (88), der zweiten (132) bzw. der dritten (142) Hauptflugsteuerungsverbindung über Steuerungsverbindungen (92, 135, 143) verbunden sind; wobei die Überwachungscomputer (22, 24, 26) der Flugsteuerung dazu geeignet sind, die Integrität der von den Kodier-Einheiten (34, 36, 38) dekodierten Steuerhornpositionen zu überprüfen.

2. Steuerungssystem (2) nach Anspruch 1, **dadurch gekennzeichnet, dass** die Kodier-Einheiten (28, 30, 32) der Steuerungscomputer der Flugsteuerung und die Kodier-Einheiten (34, 36, 38) der Überwachungscomputer der Flugsteuerung dazu geeignet sind, eine erste zyklische Redundanzprüfung an einem ersten Datenpaket (P1) durchzuführen, das für die Steuerhornpositionen repräsentativ ist, und eine zweite zyklische Redundanzprüfung an einem zweiten Datenpaket (P2) durchzuführen, das für die Steuerhornpositionen repräsentativ ist, wobei das zweite Datenpaket mehrere erste Datenpakete (P1) umfasst.

3. Steuerungssystem (2) nach einem der Ansprüche 1 und 2, **dadurch gekennzeichnet, dass** es umfasst:
• eine einzige unidirektionale Flugsteuerungsverbindung, als erste Flugsteuerungs-Hilfsverbindung (94) bezeichnet, die dazu geeignet ist, die kodierten Steuerhornpositionen von dem Steuerungscomputer (16) der ersten Stufe der Flugsteuerung zu dem Steuerungscomputer (42) der zweiten Stufe der Positionsberechnung für die Steuerflächen zu übertragen;
• eine einzige unidirektionale Flugsteuerungsverbindung, als erste Notfall-Flugsteuerungsverbindung (98) bezeichnet, die dazu geeignet ist, die kodierten Steuerhornpositionen von dem Steuerungscomputer (16) der ersten Stufe der Flugsteuerung zu dem Steuerungscomputer (44) der dritten Stufe der Positionsberechnung für die Steuerflächen zu übertragen.

4. Steuerungssystem (2) nach Anspruch 3, **dadurch gekennzeichnet, dass** der Überwachungscomputer (48) der zweiten Stufe und der Überwachungscomputer (50) der dritten Stufe der Positionsberechnung für die Steuerflächen mit der ersten Flugsteuerungs-Hilfsverbindung (94) bzw. der ersten Notfall-Flugsteuerungsverbindung (98) über Steuerungsverbindungen (96, 130) verbunden sind.

5. Steuerungssystem (2) nach einem der Ansprüche 1 bis 4, **dadurch gekennzeichnet, dass** es umfasst:
• eine einzige unidirektionale Flugsteuerungsverbindung, als zweite Flugsteuerungs-Hilfsverbindung (134) bezeichnet, die dazu geeignet ist, die kodierten Steuerhornpositionen von dem Steuerungscomputer (18) der zweiten Stufe der Flugsteuerung zu dem Steuerungscomputer (44) der dritten Stufe der Positionsberechnung für die Steuerflächen zu übertragen;
• eine einzige unidirektionale Flugsteuerungsverbindung, als zweite Notfall-Flugsteuerungsverbindung (138) bezeichnet, die dazu geeignet ist, die kodierten Steuerhornpositionen von dem Steuerungscomputer (18) der zweiten Stufe der Flugsteuerung zu dem Steuerungscomputer (40) der ersten Stufe der Positionsberechnung für die Steuerflächen zu übertragen.

6. Steuerungssystem (2) nach Anspruch 5, **dadurch gekennzeichnet, dass** der Überwachungscomputer (50) der dritten Stufe und der Überwachungscomputer (46) der ersten Stufe der Positionsberechnung für die Steuerflächen mit der zweiten Flugsteuerungs-Hilfsverbindung (134) bzw. mit der zweiten Notfall-Flugsteuerungsverbindung (138) über Steuerungsverbindungen (136, 140) verbunden sind.

7. Steuerungssystem (2) nach einem der Ansprüche 1 bis 6, **dadurch gekennzeichnet, dass** es umfasst:
• eine einzige unidirektionale Flugsteuerungsverbindung, als dritte Flugsteuerungs-Hilfsverbindung (146) bezeichnet, die dazu geeignet ist, die kodierten Steuerhornpositionen von dem Steuerungscomputer (20) der dritten Stufe der Flugsteuerung zu dem Steuerungscomputer (40) der ersten Stufe der Positionsberechnung für die Steuerflächen zu übertragen;
• eine einzige unidirektionale Flugsteuerungsverbindung, als dritte Notfall-Flugsteuerungsverbindung (150) bezeichnet, die dazu geeignet ist, die kodierten Steuerhornpositionen von dem Steuerungscomputer (20) der dritten Stufe der Flugsteuerung zu dem Steuerungscomputer (40) der zweiten Stufe der Positionsberechnung für die Steuerflächen zu übertragen.

8. Steuerungssystem (2) nach Anspruch 7, **dadurch gekennzeichnet, dass** der Überwachungscomputer (46) der ersten Stufe und der Überwachungscomputer (48) der zweiten Stufe der Positionsberechnung für die Steuerflächen mit der dritten Flugsteuerungs-Hilfsverbindung (146) bzw. der dritten Notfall-Flugsteuerungsverbindung (150) über Steuerungsverbindungen (148, 152) verbunden sind.

9. Steuerungssystem (2) nach einem der Ansprüche 1 bis 8, **dadurch gekennzeichnet, dass** die Positionsberechnung für die Steuerflächen (6) dazu geeignet ist, die tatsächlichen Positionen der Steuerflächen zu empfangen, wobei mindestens ein Steuerungscomputer (40, 42, 44) und ein Überwachungscomputer (46, 48, 50) der Positionsberechnung für die Steuerflächen dazu geeignet sind, Kraftregelungen in Abhängigkeit von den empfangenen tatsächlichen Positionen der Steuerflächen zu berechnen, und dass das Steuerungssystem (2) umfasst:
- eine einzige unidirektionale Force-Feedback-Steuerungsverbindung, als erste Force-Feedback-Verbindung (236) bezeichnet, die dazu geeignet ist, die Kraftregelungen von dem Steuerungscomputer (40) der ersten Stufe der Positionsberechnung für die Steuerflächen zu dem Steuerungscomputer (16) der ersten Stufe der Flugsteuerung zu übertragen;
- eine einzige unidirektionale Force-Feedback-Steuerungsverbindung, als zweite Force-Feedback-Verbindung (242) bezeichnet, die dazu geeignet ist, die Kraftregelungen von dem Steuerungscomputer (42) der zweiten Stufe der Positionsberechnung für die Steuerflächen zu dem Steuerungscomputer (18) der zweiten Stufe der Flugsteuerung zu übertragen;
- eine einzige unidirektionale Force-Feedback-Steuerungsverbindung, als dritte Force-Feedback-Verbindung (248) bezeichnet, die dazu geeignet ist, die Kraftregelungen von dem Steuerungscomputer (44) der dritten Stufe der Positionsberechnung für die Steuerflächen zu dem Steuerungscomputer (20) der dritten Stufe der Flugsteuerung zu übertragen.

10. Steuerungssystem (2) nach Anspruch 9, **dadurch gekennzeichnet, dass** die Steuerungscomputer (40, 42, 44) zur Positionsberechnung für die Steuerflächen jeweils eine Kodier-Einheit (52, 54, 56) zur Kodierung der Kraftregelungen umfassen, und dass die Überwachungscomputer (46, 48, 50) der Positionsberechnung für die Steuerflächen jeweils eine Kodier-Einheit (58, 60, 62) umfassen, die dazu geeignet ist, die kodierten Kraftregelungen zu dekodieren; wobei die Kodier-Einheiten (58, 60, 62) der Überwachungscomputer der ersten Stufe, der zweiten Stufe und der dritten Stufe der Positionsberechnung für die Steuerflächen jeweils mit der ersten (236), zweiten (242) bzw. dritten (248) Force-Feedback-Verbindung über Steuerungsverbindungen (238, 244, 250) verbunden sind; wobei die Überwachungscomputer (46, 48, 50) der Positionsberechnung für die Steuerflächen dazu geeignet sind, die Integrität der von den Kodier-Einheiten dekodierten Kraftregelungen zu überprüfen.

11. Steuerungssystem (2) nach einem der Ansprüche 9 und 10, **dadurch gekennzeichnet, dass** das der Überwachungscomputer (22) der ersten Stufe der Flugsteuerung, der Steuerungscomputer (18) und der Überwachungscomputer (24) der zweiten Stufe der Flugsteuerung, und der Steuerungscomputer (20) und der Überwachungscomputer (26) der dritten Stufe der Flugsteuerung jeweils mit der ersten Force-Feedback-Verbindung (236) über Steuerungsverbindungen (240) verbunden sind;
dass der Überwachungscomputer (24) der zweiten Stufe der Flugsteuerung, der Steuerungscomputer (16) und der Überwachungscomputer (22) der ersten Stufe der Flugsteuerung und der Steuerungscomputer (20) und der Überwachungscomputer (26) der dritten Stufe der Flugsteuerung jeweils mit der zweiten Force-Feedback-Verbindung (242) über Steuerungsverbindungen (246) verbunden sind;
dass der Überwachungscomputer (26) der dritten Stufe der Flugsteuerung, der Steuerungscomputer (16) und der Überwachungscomputer (22) der ersten Stufe der Flugsteuerung und der Steuerungscomputer (18) und der Überwachungscomputer (24) der zweiten Stufe der Flugsteuerung jeweils mit der dritten Force-Feedback-Verbindung (248) über Steuerungsverbindungen (252) verbunden sind.

12. Elektrisches Flugsteuerungssystem (2) für Flugzeuge, umfassend aerodynamische Steuerflächen, Aktuatoren, die dazu in der Lage sind, die aerodynamischen Steuerflächen gemäß den Antriebsanweisungen anzutreiben, ein Steuerhorn (9), dass dazu geeignet ist, bewegt zu werden, um den Antrieb der aerodynamischen Steuerflächen zu steuern, wobei das Steuerungssystem (2) umfasst:
- eine Positionsberechnung für die Steuerflächen (6), umfassend eine erste Stufe (10) und eine zweite Stufe (12), jeweils umfassend:
• einen Steuerungscomputer (40, 42), der dazu geeignet ist, Steuerhornpositionen zu empfangen und Positionen der Steuerflächen aus den Steuerhornpositionen zu berechnen, wobei der Steuerungscomputer (40, 42) eine Kodier-Einheit (52, 54) aufweist, die dazu geeignet ist, kodierte Positionen der Steuerflächen zu erzeugen, und
• einen Überwachungscomputer (46, 48), der dazu geeignet ist, die Integrität der von dem Steuerungscomputer (40, 42) berechneten Positionen der Steuerflächen zu überprüfen;
- eine Aktuatorsteuerung (8), die eine erste Stufe (10) und eine zweite Stufe (12) aufweist, jeweils umfassend:
• einen Steuerungscomputer (64, 66), der dazu geeignet ist, Antriebsanweisungen für die Aktuatoren der aerodynamischen Steuerflächen aus den Positionen der Steuerflächen zu bestimmen, und
• einen Überwachungscomputer (70, 72), der dazu in der Lage ist, die Integrität der von dem Steuerungscomputer (64, 66) bestimmten Antriebsanweisungen zu überprüfen;
- eine unidirektionale Steuerungsverbindung für die Positionen der Steuerflächen, als erste Hauptsteuerungsverbindung (154) bezeichnet, die den Steuerungscomputer (40) der ersten Stufe der Positionsberechnung für die Steuerflächen mit dem Steuerungscomputer (64) der ersten Stufe der Aktuatorsteuerung verbindet;
- eine unidirektionale Steuerungsverbindung für die Positionen der Steuerflächen, als zweite Hauptsteuerungsverbindung (166) bezeichnet, die den Steuerungscomputer (42) der zweiten Stufe der Positionsberechnung für die Steuerflächen mit dem Steuerungscomputer (66) der zweiten Stufe der Aktuatorsteuerung verbindet;
**dadurch gekennzeichnet, dass** die Positionsberechnung für die Steuerflächen eine dritte Stufe (14) aufweist, umfassend:
• einen Steuerungscomputer (44), der dazu geeignet ist, Steuerhornpositionen zu empfangen und Positionen der Steuerflächen aus den Steuerhornpositionen zu berechnen, wobei der Steuerungscomputer (44) eine Kodier-Einheit (56) aufweist, die dazu geeignet ist, kodierte Positionen der Steuerflächen zu erzeugen;
• einen Überwachungscomputer (50), der dazu in der Lage ist, die Integrität der von dem Steuerungscomputer (44) berechneten Positionen der Steuerflächen zu überprüfen;
und dass die Aktuatorsteuerung (8) eine dritte Stufe (14) aufweist, umfassend:
• einen Steuerungscomputer (68), der dazu geeignet ist, Antriebsanweisungen aus den kodierten Positionen der Steuerflächen zu berechnen, und
• einen Überwachungscomputer (74), der dazu in der Lage ist, die Integrität der von dem Steuerungscomputer berechneten Antriebsanweisungen zu überprüfen;
und dass das Steuerungssystem (2) umfasst:
• eine unidirektionale Steuerungsverbindung für die Positionen der Steuerflächen, als dritte Hauptsteuerungsverbindung (180) bezeichnet, die den Steuerungscomputer (44) der dritten Stufe der Positionsberechnung für die Steuerflächen mit dem Steuerungscomputer (74) der dritten Stufe der Aktuatorsteuerung verbindet;
und dass die erste Hauptsteuerungsverbindung (154) die einzige Steuerungsverbindung ist, die dazu geeignet ist, die kodierten Positionen der Steuerflächen von dem Steuerungscomputer (40) der ersten Stufe der Positionsberechnung für die Steuerflächen zu dem Steuerungscomputer (64) der ersten Stufe der Aktuatorsteuerung zu übertragen;
wobei die zweite Hauptsteuerungsverbindung (166) die einzige Steuerungsverbindung ist, die dazu geeignet ist, die kodierten Positionen der Steuerflächen von dem Steuerungscomputer (42) der zweiten Stufe der Positionsberechnung für die Steuerflächen zu dem Steuerungscomputer (66) der zweiten Stufe der Aktuatorsteuerung zu übertragen;
wobei die dritte Hauptsteuerungsverbindung (180) die einzige Steuerungsverbindung ist, die dazu geeignet ist, die kodierten Positionen der Steuerflächen von dem Steuerungscomputer (44) der dritten Stufe der Positionsberechnung für die Steuerflächen zu dem Steuerungscomputer (74) der dritten Stufe der Aktuatorsteuerung zu übertragen;
wobei die Überwachungscomputer (46, 48, 50) der ersten Stufe, der zweiten Stufe und der dritten Stufe der Positionsberechnung für die Steuerflächen jeweils mit der ersten (154), zweiten (166) bzw. dritten (180) Steuerungsverbindung über Steuerungsverbindungen (165, 178, 192) zum Empfangen der kodierten Positionen der Steuerflächen verbunden sind;
wobei die Überwachungscomputer (46, 48, 50) der Positionsberechnung für die Steuerflächen jeweils eine Kodier-Einheit (58, 60, 62) umfassen, die dazu geeignet ist, die kodierten Positionen der Steuerflächen zu dekodieren; wobei die Überwachungscomputer (46, 48, 50) der Positionsberechnung für die Steuerflächen dazu geeignet sind, die Integrität der von den Kodier-Einheiten (58, 60, 62) dekodierten Positionen der Steuerflächen zu überprüfen.

13. Steuerungssystem (2) nach Anspruch 12, **dadurch gekennzeichnet, dass** die Kodier-Einheiten (52, 54, 56) des Steuerungscomputers der Positionsberechnung für die Steuerflächen und die Kodier-Einheiten (58, 60) des Überwachungscomputers der Aktuatorsteuerung dazu geeignet sind, eine erste zyklische Redundanzprüfung an einem ersten Datenpaket (P1), das für die Steuerhornpositionen repräsentativ ist, und eine zweite zyklische Redundanzprüfung an einem zweiten Datenpaket (P2), das für die Steuerhornpositionen repräsentativ ist, zu implementieren; wobei das zweite Datenpaket (P2) mehrere erste Datenpakete (P1) umfasst.

14. Steuerungssystem (2) nach einem der Ansprüche 12 bis 13, **dadurch gekennzeichnet, dass** es umfasst:
• eine einzige unidirektionale Steuerungsverbindung, als erste Hilfssteuerungsverbindung (158) bezeichnet, die dazu geeignet ist, die kodierten Positionen der Steuerflächen von dem Steuerungscomputer (40) der ersten Stufe der Positionsberechnung für die Steuerflächen zu dem Steuerungscomputer (66) der zweiten Stufe der Aktuatorsteuerung zu übertragen;
• eine einzige unidirektionale Flugsteuerungsverbindung, als erste Notfallsteuerungsverbindung (162) bezeichnet, die dazu geeignet ist, die kodierten Positionen der Steuerflächen von dem Steuerungscomputer (40) der ersten Stufe der Positionsberechnung für die Steuerflächen zu dem Steuerungscomputer (68) der dritten Stufe der Aktuatorsteuerung zu übertragen.

15. Steuerungssystem (2) nach Anspruch 14, **dadurch gekennzeichnet, dass** der Überwachungscomputer (48) der zweiten Stufe und der Überwachungscomputer (50) der dritten Stufe der Aktuatorsteuerung mit der ersten Hilfssteuerungsverbindung (158) bzw. der ersten Notfallsteuerungsverbindung (162) über Steuerungsverbindungen (160, 164) verbunden sind.

16. Steuerungssystem (2) nach einem der Ansprüche 12 bis 15, **dadurch gekennzeichnet, dass** es umfasst:
• eine einzige unidirektionale Steuerungsverbindung, als zweite Hilfssteuerungsverbindung (170) bezeichnet, die dazu geeignet ist, die kodierten Positionen der Steuerflächen von dem Steuerungscomputer (42) der zweiten Stufe der Positionsberechnung für die Steuerflächen zu dem Steuerungscomputer (74) der dritten Stufe der Aktuatorsteuerung zu übertragen;
• eine einzige unidirektionale Steuerungsverbindung, als zweite Notfallsteuerungsverbindung (174) bezeichnet, die dazu geeignet ist, die kodierten Positionen der Steuerflächen von dem Steuerungscomputer (42) der zweiten Stufe der Positionsberechnung für die Steuerflächen zu dem Steuerungscomputer (64) der ersten Stufe der Aktuatorsteuerung zu übertragen.

17. Steuerungssystem (2) nach Anspruch 16, **dadurch gekennzeichnet, dass** der Überwachungscomputer (74) der dritten Stufe und der Überwachungscomputer (70) der ersten Stufe der Aktuatorsteuerung mit der zweiten Hilfssteuerungsverbindung (170) bzw. mit der zweiten Notfallsteuerungsverbindung (174) über Steuerungsverbindungen (172, 176) verbunden sind.

18. Steuerungssystem (2) nach einem der Ansprüche 12 bis 17, **dadurch gekennzeichnet, dass** es umfasst:
• eine einzige unidirektionale Steuerungsverbindung, als dritte Hilfssteuerungsverbindung (184) bezeichnet, die dazu geeignet ist, die kodierten Positionen der Steuerflächen von dem Steuerungscomputer (44) der dritten Stufe der Positionsberechnung für die Steuerflächen zu dem Steuerungscomputer (64) der ersten Stufe der Aktuatorsteuerung zu übertragen;
• eine einzige unidirektionale Steuerungsverbindung, als dritte Notfallsteuerungsverbindung (188) bezeichnet, die dazu geeignet ist, die kodierten Positionen der Steuerflächen von dem Steuerungscomputer (44) der dritten Stufe der Positionsberechnung für die Steuerflächen zu dem Steuerungscomputer (66) der zweiten Stufe der Aktuatorsteuerung zu übertragen.

19. Steuerungssystem (2) nach Anspruch 18, **dadurch gekennzeichnet, dass** der Überwachungscomputer (70) der ersten Stufe und der Überwachungscomputer (72) der zweiten Stufe der Aktuatorsteuerung mit der dritten Hilfssteuerungsverbindung (184) bzw. der dritten Notfallsteuerungsverbindung (188) über Steuerungsverbindungen (186, 190) verbunden sind.

20. Steuerungssystem (2) nach einem der Ansprüche 12 bis 19, **dadurch gekennzeichnet, dass** die Steuerungscomputer (64, 66, 68) und die Überwachungscomputer (70, 72, 74) der ersten, zweiten und dritten Stufe der Aktuatorsteuerung dazu geeignet sind, die tatsächlichen Positionen der Steuerflächen zu bestimmen, und dass das Steuerungssystem (2) umfasst:
- eine einzige unidirektionale Aktuator-Feedback-Steuerungsverbindung, als erste Aktuator-Feedback-Hauptverbindung (194) bezeichnet, die dazu geeignet ist, die tatsächlichen Positionen der Steuerflächen von dem Steuerungscomputer (64) der ersten Stufe der Aktuatorsteuerung zu dem Steuerungscomputer (40) der ersten Stufe der Positionsberechnung für die Steuerflächen zu übertragen;
- eine einzige unidirektionale Aktuator-Feedback-Steuerungsverbindung, als zweite Aktuator-Feedback-Hauptverbindung (208) bezeichnet, die dazu geeignet ist, die tatsächlichen Positionen der Steuerflächen von dem Steuerungscomputer (66) der zweiten Stufe der Positionsberechnung für die Steuerflächen zu dem Steuerungscomputer (66) der zweiten Stufe der Aktuatorsteuerung zu übertragen;
- eine einzige unidirektionale Aktuator-Feedback-Steuerungsverbindung, als dritte Aktuator-Feedback-Hauptverbindung (222) bezeichnet, die dazu geeignet ist, die tatsächlichen Positionen der Steuerflächen von dem Steuerungscomputer (68) der dritten Stufe der Aktuatorsteuerung zu dem Steuerungscomputer (44) der dritten Stufe der Positionsberechnung für die Steuerflächen zu übertragen.

21. Steuerungssystem (2) nach Anspruch 20, **dadurch gekennzeichnet, dass** die Steuerungscomputer (64, 66, 68) der Aktuatorsteuerung jeweils eine Kodier-Einheit (76, 78, 80) umfassen, die dazu geeignet ist, kodierte Positionen der Steuerflächen zu erzeugen, und dass die Überwachungscomputer (70) der ersten Stufe, der zweiten Stufe und der dritten Stufe der Aktuatorsteuerung mit der ersten, zweiten bzw. dritten Aktuator-Feedback-Hauptverbindung (194, 208, 222) über Steuerungsverbindungen (196, 220, 226) verbunden sind; dass die Überwachungscomputer (70, 72, 74) der Aktuatorsteuerung jeweils eine Kodier-Einheit (82, 84, 86) umfassen, die dazu geeignet ist, die kodierten tatsächlichen Positionen der Steuerflächen zu dekodieren; wobei die Überwachungscomputer (70, 72, 74) der Aktuatorsteuerung dazu geeignet sind, die Integrität der von den Kodier-Einheiten (82, 84, 86) dekodierten tatsächlichen Positionen der Steuerflächen zu überprüfen.

22. Steuerungssystem (2) nach Anspruch 19, **dadurch gekennzeichnet, dass** der Überwachungscomputer (46) der ersten Stufe der Positionsberechnung für die Steuerflächen über eine Steuerungsverbindung (198) mit der ersten Aktuator-Feedback-Hauptverbindung (194) verbunden ist;
dass der Überwachungscomputer (48) der zweiten Stufe der Positionsberechnung für die Steuerflächen mit der zweiten Aktuator-Feedback-Hauptverbindung (208) über eine Steuerungsverbindung (210) verbunden ist;
dass der Überwachungscomputer (50) der dritten Stufe der Positionsberechnung für die Steuerflächen mit der dritten Aktuator-Feedback-Hauptverbindung (222) über eine Steuerungsverbindung (224) verbunden ist.

23. Steuerungssystem (2) nach einem der Ansprüche 12 bis 22, **dadurch gekennzeichnet, dass** es umfasst:
• eine einzige unidirektionale Aktuator-Feedback-Steuerungsverbindung, als erste Aktuator-Feedback-Hilfsverbindung (200) bezeichnet, die dazu geeignet ist, die kodierten tatsächlichen Positionen der Steuerflächen von dem Steuerungscomputer (64) der ersten Stufe der Aktuatorsteuerung zu dem Steuerungscomputer (42) der zweiten Stufe der Positionsberechnung für die Steuerflächen zu übertragen;
• eine einzige Aktuator-Feedback-Steuerungsverbindung, als erste Notfallfall-Aktuator-Feedback-Verbindung (204) bezeichnet, die dazu geeignet ist, die kodierten tatsächlichen Positionen der Steuerflächen von dem Steuerungscomputer (64) der ersten Stufe der Aktuatorsteuerung zu dem Steuerungscomputer (44) der dritten Stufe der Positionsberechnung für die Steuerflächen zu übertragen.

24. Steuerungssystem (2) nach Anspruch 23, **dadurch gekennzeichnet, dass** der Überwachungscomputer (48) der zweiten Stufe und der Überwachungscomputer (50) der dritten Stufe der Positionsberechnung für die Steuerflächen mit der ersten Aktuator-Feedback-Hilfsverbindung (200) bzw. mit der ersten Notfallfall-Aktuator-Feedback-Verbindung (204) über Steuerungsverbindungen (202, 206) verbunden sind.

25. Steuerungssystem (2) nach einem der Ansprüche 12 bis 24, **dadurch gekennzeichnet, dass** es umfasst:
• eine einzige unidirektionale Aktuator-Feedback-Steuerungsverbindung, als zweite Aktuator-Feedback-Hilfsverbindung (212) bezeichnet, die dazu geeignet ist, die kodierten tatsächlichen Positionen der Steuerflächen von dem Steuerungscomputer (66) der zweiten Stufe der Aktuatorsteuerung zu dem Steuerungscomputer (44) der dritten Stufe der Positionsberechnung für die Steuerflächen zu übertragen;
• eine einzige unidirektionale Aktuator-Feedback-Steuerungsverbindung, als zweite Notfallfall-Aktuator-Feedback-Verbindung (216) bezeichnet, die dazu geeignet ist, die tatsächlichen Positionen der kodierten Steuerflächen von dem Steuerungscomputer (66) der zweiten Stufe der Aktuatorsteuerung zu dem Steuerungscomputer (40) der ersten Stufe der Positionsberechnung für die Steuerflächen zu übertragen.

26. Steuerungssystem (2) nach Anspruch 25, **dadurch gekennzeichnet, dass** der Überwachungscomputer (50) der dritten Stufe und der Überwachungscomputer (46) der ersten Stufe der Positionsberechnung für die Steuerflächen mit der zweiten Aktuator-Feedback-Hilfsverbindung (212) bzw. mit der zweiten Notfallfall-Aktuator-Feedback-Verbindung (216) über Steuerungsverbindungen (214, 218) verbunden sind.

27. Steuerungssystem (2) nach einem der Ansprüche 12 bis 26, **dadurch gekennzeichnet, dass** es umfasst:
• eine einzige unidirektionale Aktuator-Feedback-Steuerungsverbindung, als dritte Hilfsaktuator-Feedback-Verbindung (228) bezeichnet, die dazu geeignet ist, die tatsächlichen kodierten Positionen der Steuerflächen von dem Steuerungscomputer (68) der dritten Stufe der Aktuatorsteuerung zu dem Steuerungscomputer (40) der ersten Stufe der Positionsberechnung für die Steuerflächen zu übertragen;
• eine einzige unidirektionale Aktuator-Feedback-Steuerungsverbindung, als dritte Notfallfall-Aktuator-Feedback-Verbindung (232) bezeichnet, die dazu geeignet ist, die tatsächlichen kodierten Positionen der Steuerflächen von dem Steuerungscomputer (68) der dritten Stufe der Aktuatorsteuerung zu dem Steuerungscomputer (42) der zweiten Stufe der Positionsberechnung für die Steuerflächen zu übertragen.

28. Steuerungssystem (2) nach Anspruch 25, **dadurch gekennzeichnet, dass** der Überwachungscomputer (46) der ersten Stufe und der Überwachungscomputer (48) der zweiten Stufe der Positionsberechnung für die Steuerflächen mit der dritten Aktuator-Feedback-Hilfsverbindung (228) bzw. der dritten Notfallfall-Aktuator-Feedback-Verbindung (232) über Steuerungsverbindungen (230, 234) verbunden sind.

## Claims

1. Fly-by-wire control system (2) for aircraft comprising aerodynamic flight-control surfaces and a stick (9) for piloting said aerodynamic flight-control surfaces, said control system (2) comprising:
- a piloting control (4) comprising a first stage (10) and a second (12) stage each comprising:
• a control computer (16, 18) appropriate for determining the positions of the stick and, where said control computer (16, 18) comprises an encoder (28, 30) appropriate for generating encoded stick positions;
• a monitoring computer (22, 24) suited to verify the integrity of the stick positions determined by the control computer (16, 18);
- a position calculation for the flight-control surfaces (6) comprising a first stage (10) and a second stage (14), each comprising:
• a control computer (40, 42) appropriate for calculating positions of the flight-control surfaces using encoded stick positions; and
• a monitoring computer (46, 48) suited to verify the integrity of the positions of the flight-control surfaces calculated by the control computer (40, 42);
- a unidirectional link for piloting controls, referred to as first main piloting link (88), connecting the control computer (16) for the first stage of the piloting control to the control computer (40) for the first stage of the position calculation for the flight-control surfaces;
- a unidirectional link for piloting controls, referred to as second main piloting link (132), connecting the control computer (18) for the second stage of the piloting control to the control computer (42) for the second stage of the position calculation for the flight-control surfaces;
**characterized in that** the piloting control (4) comprises a third stage (14) including:
• a control computer (20) appropriate for determining the positions of the stick, where said control computer (20) comprises an encoder (32) appropriate for generating encoded stick positions, and
• a monitoring computer (26) suited to verify the integrity of the stick positions determined by the control computer (20) and **in that** the position calculation for the flight-control surfaces (6) comprises a third stage (14) compising:
• a control computer (44) appropriate for calculating positions of the flight-control surfaces using encoded stick positions; and
• a monitoring computer (50) suited to verify the integrity of the positions of the flight-control surfaces calculated by the control computer (44);
and **in that** the control system (2) comprises a unidirectional link for piloting controls, referred to as third main piloting link (142), connecting the control computer (20) for the third stage of the piloting control to the control computer (44) for the third stage of the position calculation for the flight-control surfaces;
and **in that** the first main piloting link (88) is the only control link appropriate for sending encoded stick positions from the control computer (16) for the first stage of the piloting control to the control computer (40) for the first stage of the position calculation for the flight-control surfaces;
where the second main piloting link (132) is the only control link appropriate for sending encoded stick positions from the control computer (18) for the second stage of the piloting control to the control computer (20) for the second stage of the position calculation for the flight-control surfaces;
where the third main piloting link (142 is the only control link appropriate for sending encoded stick positions from the control computer (20) for the third stage of the piloting control to the control computer (44) for the third stage of the position calculation for the flight-control surfaces;
where the monitoring computer (46) for the first stage, the monitoring computer (48) for the second stage and the monitoring computer (50) for the third stage of the position calculation for the flight-control surfaces are connected respectively to said first (88), second (132) and third (142) main piloting links, via control links (90, 133, 144);
and in which the monitoring computers (22, 24, 26) for the piloting control each comprise one encoder (34, 36, 38) appropriate for decoding the encoded stick positions; where the monitoring computers (22, 24, 26) for the first stage, second stage and third stage of the piloting control are connected respectively to said first (88), second (132) and third (142) main piloting links via control links (92, 135, 143); where the monitoring computers (22, 24, 26) for the piloting control are appropriate for verifying the integrity of the stick positions decoded by said encoders (34, 36, 38).

2. Control system (2) according to claim 1, **characterized in that** the encoders (28, 30, 32) of the control computers for the piloting control and the encoders (34, 36, 38) of the monitoring computers for the piloting control are appropriate for implementing a first cyclic redundancy check on a first data packet (P1) representative of said stick positions and a second cyclic redundancy check on a second data packet (P2) representative of said stick positions, where said second data packet comprises several first data packets (P1).

3. Control system (2) according to any one of claims 1 and 2, **characterized in that** it comprises:
• a single unidirectional control link for piloting, referred to as first auxiliary link for piloting (94), appropriate for sending the encoded stick positions from the control computer (16) for the first stage of the piloting control to the control computer (42) for the second stage of the position calculation for the flight-control surfaces;
• a single unidirectional control link for piloting, referred to as first backup link for piloting (98), appropriate for sending the encoded stick positions from the control computer (16) for the first stage of the piloting control to the control computer (44) for the third stage of the position calculation for the flight-control surfaces.

4. Control system (2) according to claim 3, **characterized in that** the monitoring computer (48) for the second stage and the monitoring computer (50) for the third stage of the position calculation for the flight-control surfaces are connected respectively to said first auxiliary link for piloting (94) and to said first backup link for piloting (98) by control links (96, 130).

5. Control system (2) according to any one of claims 1 and 4, **characterized in that** it comprises:
• a single unidirectional control link for piloting, referred to as second auxiliary link for piloting (134), appropriate for sending the encoded stick positions from the control computer (18) for the second stage of the piloting control to the control computer (44) for the third stage of the position calculation for the flight-control surfaces;
• a single unidirectional control link for piloting, referred to as second backup link for piloting (138), appropriate for sending the encoded stick positions from the control computer (18) for the second stage of the piloting control to the control computer (40) for the first stage of the position calculation for the flight-control surfaces.

6. Control system (2) according to claim 5, **characterized in that** the monitoring computer (50) for the third stage and the monitoring computer (46) for the first stage of the position calculation for the flight-control surfaces are connected respectively to said second auxiliary link for piloting (134) and to said second backup link for piloting (138) by control links (136, 140).

7. Control system (2) according to any one of claims 1 and 6, **characterized in that** it comprises:
• a single unidirectional control link for piloting, referred to as third auxiliary link for piloting (146), appropriate for sending the encoded stick positions from the control computer (20) for the third stage of the piloting control to the control computer (40) for the first stage of the position calculation for the flight-control surfaces;
• a single unidirectional control link for piloting, referred to as third backup link for piloting (50), appropriate for sending the encoded stick positions from the control computer (20) for the third stage of the piloting control to the control computer (40) for the second stage of the position calculation for the flight-control surfaces.

8. Control system (2) according to claim 7, **characterized in that** the monitoring computer (46) for the first stage and the monitoring computer (48) for the second stage of the position calculation for the flight-control surfaces are connected respectively to said third auxiliary link for piloting (146) and to said third backup link for piloting (150) by control links (148, 152).

9. Control system (2) according to any one of claims 1 to 8, **characterized in that** the position calculation for the flight-control surfaces (6) is appropriate for receiving actual positions for the flight-control surfaces, where at least one control computer (40, 42, 44) and one monitoring computer (46, 48, 50) for the position calculation for the flight-control surfaces are appropriate for calculating force controls as a function of the received actual positions of the flight-control surfaces, and **in that** the control system (2) comprises:
- a single unidirectional control link for force feedback, referred to as first force feedback link (236), appropriate for sending said force controls from the control computer (40) for the first stage of the position calculation for the flight-control surfaces to the control computer (16) for the first stage of the piloting control;
- a single unidirectional control link for force feedback, referred to as second force feedback link (242), appropriate for sending said force controls from the control computer (42) for the second stage of the position calculation for the flight-control surfaces to the control computer (18) for the second stage of the piloting control;
- a single unidirectional control link for force feedback, referred to as third force feedback link (248), appropriate for sending said force controls from the control computer (44) for the third stage of the position calculation for the flight-control surfaces to the control computer (20) for the third stage of the piloting control.

10. Control system (2) according to claim 9, **characterized in that** the control computers (40, 42, 44) for the position calculation for the flight-control surfaces each comprise one encoder (52, 54, 56) for encoding the force controls, and **in that** said monitoring computers (46, 48, 50) for the position calculation for the flight-control surfaces each comprise an encoder (58, 60, 62) appropriate for decoding the encoded force controls; where said encoders (58, 60, 62) for the monitoring computers for the first stage, second stage and third stage of the position calculation for the flight-control surfaces are connected respectively to said first (236), second (242) and third (248) force feedback links via control links (238, 244, 250); where said monitoring computers (46, 48, 50) for the position calculation for the flight-control surfaces are appropriate for verifying the integrity of the force controls decoded by said encoders.

11. Control system (2) according to any one of claims 9 and 10, **characterized in that** the monitoring computer (22) for the first stage of the piloting control, the control computer (18) and the monitoring computer (24) for the second stage of the piloting control, and the control computer (20) and the monitoring computer (26) for the third stage of the piloting control are each connected to said first force feedback link (236) via control links (240);
where the monitoring computer (24) for the second stage of the piloting control, the control computer (16) and the monitoring computer (22) for the first stage of the piloting control, and the control computer (20) and the monitoring computer (26) for the third stage of the piloting control are each connected to said second force feedback link (242) via control links (246);
where the monitoring computer (26) for the third stage of the piloting control, the control computer (16) and the monitoring computer (22) for the first stage of the piloting control, and the control computer (18) and the monitoring computer (24) for the second stage of the piloting control are each connected to said third force feedback link (248) via control links (252).

12. Fly-by-wire control system (2) for aircraft comprising aerodynamic flight-control surfaces, actuators suited to drive said aerodynamic flight-control surfaces based on driving instructions, and a stick (9) appropriate for being moved for piloting the driving of said aerodynamic flight-control surfaces, where the control system (2) comprises:
- a position calculation for the flight-control surfaces (6) comprising a first stage (10) and a second stage (12), each comprising:
• a control computer (40, 42) appropriate for receiving positions from the stick and for calculating positions for the flight-control surfaces based on the positions of the stick, where said control computer (40, 42) comprises an encoder (52, 54) appropriate for generating encoded positions of the flight-control surfaces; and
• a monitoring computer (46, 48) suited to verify the integrity of the positions of the flight-control surfaces calculated by the control computer (40, 42);
- an actuators control (8) comprising a first stage (10) and a second stage (12) each comprising:
• a control computer (64, 66) appropriate for determining driving instructions for the actuators for aerodynamic flight-control surfaces based on the positions of the flight-control surfaces; and
• a monitoring computer suited (70, 72) to verify the integrity of the driving instructions determined by the control computer (64, 66);
- a unidirectional control link for position of the flight-control surfaces, referred to as first main control link (154), connecting the control computer (40) for the first stage of the position calculation for the flight-control surfaces to the control computer (64) for the first stage of the actuators control;
- a unidirectional control link for position of the flight-control surfaces, referred to as second main control link (166), connecting the control computer (42) for the second stage of the position calculation for the flight-control surfaces to the control computer (66) for the second stage of the actuators control;
**characterized in that** the position calculation for the flight-control surfaces comprises a third stage (14) including:
• a control computer (44) appropriate for receiving positions from the stick and for calculating positions for the flight-control surfaces based on the positions of the stick, where said control computer (44) comprises an encoder (56) appropriate for generating encoded positions of the flight-control surfaces;
• a monitoring computer (50) suited to verify the integrity of the positions of the flight-control surfaces calculated by the control computer (44);
and **in that** the actuators control (8) comprises a third stage (14) comprising:
• a control computer (68) appropriate for calculating driving instructions based on encoded positions of the flight-control surfaces; and
• a monitoring computer (74) suited to verify the integrity of the driving instructions calculated by the control computer;
and **in that** the control system (2) comprises:
• a unidirectional control link for position of the flight-control surfaces, referred to as third main control link (180), connecting the control computer (44) for the third stage of the position calculation for the flight-control surfaces to the control computer (68) for the third stage of the actuators control;
and **in that** the first main control link (154) is the only control link appropriate for sending encoded positions of the flight-control surfaces from the control computer (40) for the first stage of the position calculation for the flight-control surfaces to the control computer (64) for the first stage of the actuators control;
where the second main control link (166) is the only control link appropriate for sending encoded positions of the flight-control surfaces from the control computer (42) for the second stage of the position calculation for the flight-control surfaces to the control computer (66) for the second stage of the actuators control;
where the third main control link is the only control link (180) appropriate for sending encoded positions of the flight-control surfaces from the control computer (44) for the third stage of the position calculation for the flight-control surfaces to the control computer (74) for the third stage of the actuators control;
where the monitoring computers (46, 48, 50) for the first stage, second stage and third stage of the position calculation for the flight-control surfaces are each connected respectively to said first (154), second (166) and third control (180) links via control links (165, 178, 192) for receiving the encoded positions of the flight-control surfaces;
where the monitoring computers (46, 48, 50) for the flight control surfaces position calculation each comprise an encoder (58, 60, 62) adapted for decoding the encoded flight control surfaces positions; where the monitoring computers (46, 48, 50) for the position calculation for the flight-control surfaces are appropriate for verifying the integrity of the positions of the flight-control surfaces decoded by said encoders (58, 60, 62).

13. Control system (2) according to claim 12, **characterized in that** the encoders (52, 54, 56) of the control computer for the position calculation for the flight-control surfaces and the encoders (58, 60, 62) of the monitoring computer for the actuators are appropriate for implementing a first cyclic redundancy check on a first data packet (P1) representative of said stick positions and a second cyclic redundancy check on a second data packet (P2) representative of said stick positions, where said second data packet (P2) comprises several first data packets (P1).

14. Control system (2) according to any one of claims 12 to 13, **characterized in that** it comprises:
• a single unidirectional control link, referred to as first auxiliary control link, (158) appropriate for sending the encoded positions of the flight-control surfaces from the control computer (40) for first stage of the position calculation for the flight-control surfaces to the control computer (66) for the second stage of the actuators control;
• a single unidirectional control link, referred to as first backup control link (162), appropriate for sending the encoded positions of the flight-control surfaces from the control computer (40) for first stage of the position calculation for the flight-control surfaces to the control computer (68) for the third stage of the actuators control.

15. Control system (2) according to claim 14, **characterized in that** the monitoring computer (48) for the second stage and the monitoring computer (50) for the third stage of the actuators control are connected respectively to said first auxiliary control link (158 and to said first backup control link (162) via control links (160, 164).

16. Control system (2) according to any one of claims 12 to 15, **characterized in that** it comprises:
• a single unidirectional control link, referred to as second auxiliary control link (170), appropriate for sending the encoded positions of the flight-control surfaces from the control computer (42) for the second stage of the position calculation for the flight-control surfaces to the control computer (74) for the third stage of the actuators control;
• a single unidirectional control link, referred to as second backup control link (174), appropriate for sending the encoded positions of the flight-control surfaces from the control computer (42) for the second stage of the position calculation for the flight-control surfaces to the control computer (64) for the first stage of the actuators control.

17. Control system (2) according to claim 16, **characterized in that** the monitoring computer (74) for the third stage and the monitoring computer (70) for the first stage of the actuators control are connected respectively to said second auxiliary control link (170) and to said second backup control link (174) via control links (172, 176).

18. Control system (2) according to any one of claims 12 to 17, **characterized in that** it comprises:
• a single unidirectional control link, referred to as third auxiliary control link (184), appropriate for sending the encoded positions of the flight-control surfaces from the control computer (44) for the third stage of the position calculation for the flight-control surfaces to the control computer (64) for the first stage of the actuators control;
• a single unidirectional control link, referred to as third backup control link (188), appropriate for sending the encoded positions of the flight-control surfaces from the control computer (44) for the third stage of the position calculation for the flight-control surfaces to the control computer (66) for the second stage of the actuators control.

19. Control system (2) according to claim 18, **characterized in that** the monitoring computer (70) for the first stage and the monitoring computer (72) for the second stage of the actuators control are connected respectively to said third auxiliary control link (184) and to said third backup control link (188) via control links (186, 190).

20. Control system (2) according to any one of claims 12 to 19, **characterized in that** the control computers (64, 66, 68) and the monitoring computers (70, 72, 74) for the first, second and third stages of the actuators control are appropriate for determining actual positions of the flight-control surfaces, and **in that** the control system (2) comprises:
- one single unidirectional control link for feedback from actuators, referred to as first main link for feedback from actuators (194), appropriate for sending said actual positions of the flight-control surfaces from the control computer (64) for the first stage of the actuators control to the control computer (40) for the first stage of the position calculation for the flight-control surfaces;
- one single unidirectional control link for feedback from actuators, referred to as second main link for feedback from actuators (280), appropriate for sending said actual positions of the flight-control surfaces from the control computer (66) for the second stage of the position calculation for the flight-control surfaces to the control computer (66) for the second stage of the actuators control;
- one single unidirectional control link for feedback from actuators, referred to as third main link for feedback from actuators (222), appropriate for sending said actual positions of the flight-control surfaces from the control computer (68) for the third stage of the actuators control to the control computer (44) for the third stage of the position calculation for the flight-control surfaces.

21. Control system (2) according to claim 20, **characterized in that** the control computers (64, 66, 68) for the actuators control each comprise one encoder (76, 78, 80) appropriate for generating encoded positions of the flight-control surfaces and **in that** the monitoring computers (70, 72, 74) for the first stage, second stage and third stage of the actuators control are connected respectively to said first, second and third main links for feedback from actuators (194, 208, 222) via control links (196, 220, 226); the monitoring computers (70, 72, 74) for the actuators control each comprise an encoder (82, 84, 86) appropriate for decoding the encoded actual positions of the flight-control surfaces; where the monitoring computers (70, 72, 74) for the actuators control are appropriate for verifying the integrity of the actual positions of the flight-control surfaces decoded by said encoders (82, 84, 86).

22. Control system (2) according to claim 19, **characterized in that** the monitoring computer (46) for the first stage of the position calculation for the flight-control surfaces is connected to said first main link for feedback from actuators (194) via a control link (198);
the monitoring computer (48) for the second stage of the position calculation for the flight-control surfaces is connected to said second main link for feedback from actuators (208) via a control link (210);
the monitoring computer (50) for the third stage of the position calculation for the flight-control surfaces is connected to said third main link for feedback from actuators (222) via a control link (224).

23. Control system (2) according to any one of claims 12 to 22, **characterized in that** it comprises:
• one single unidirectional control link for feedback from actuators, referred to as first auxiliary link for feedback from actuators (200), appropriate for sending the encoded actual positions of the flight-control surfaces from the control computer (64) for the first stage of the actuators control to the control computer (42) for the second stage of the position calculation for the flight-control surfaces;
• one single unidirectional control link for feedback from actuators, referred to as first backup link for feedback from actuators (204), appropriate for sending the encoded actual positions of the flight-control surfaces from the control computer (64) for the first stage of the actuators control to the control computer (44) for the third stage of the position calculation for the flight-control surfaces.

24. Control system (2) according to claim 23, **characterized in that** the monitoring computer (48) for the second stage and the monitoring computer (50) for the third stage of position calculation for the flight-control surfaces are connected respectively to said first auxiliary link for feedback from actuators (200) and to said first backup link for feedback from actuators (204) via control links (202, 206).

25. Control system (2) according to any one of claims 12 to 24, **characterized in that** it comprises:
• one single unidirectional control link for feedback from actuators, referred to as second auxiliary link for feedback from actuators (212), appropriate for sending the encoded actual positions of the flight-control surfaces from the control computer (66) for the second stage of the actuators control to the control computer (44) for the third stage of the position calculation for the flight-control surfaces;
• one single unidirectional control link for feedback from actuators, referred to as second backup link for feedback from actuators (216), appropriate for sending the encoded actual positions of the flight-control surfaces from the control computer (66) for the second stage of the actuators control to the control computer (40) for the first stage of the position calculation for the flight-control surfaces.

26. Control system (2) according to claim 25, **characterized in that** the monitoring computer (50) for the third stage and the monitoring computer (46) for the first stage of position calculation for the flight-control surfaces are connected respectively to said second auxiliary link for feedback from actuators (212) and to said second backup link for feedback from actuators (216) by control links (214, 218).

27. Control system (2) according to any one of claims 12 to 26, **characterized in that** it comprises:
• one single unidirectional control link for feedback from actuators, referred to as third auxiliary link for feedback from actuators (228), appropriate for sending the encoded actual positions of the flight-control surfaces from the control computer (68) for the third stage of the actuators control to the control computer (40) for the first stage of the position calculation for the flight-control surfaces;
• one single unidirectional control link for feedback from actuators, referred to as third backup link for feedback from actuators (232), appropriate for sending the encoded actual positions of the flight-control surfaces from the control computer (68) for the third stage of the actuators control to the control computer (42) for the second stage of the position calculation for the flight-control surfaces.

28. Control system (2) according to claim 25, **characterized in that** the monitoring computer (46) for the first stage and the monitoring computer (48) for the second stage of position calculation for the flight-control surfaces are connected respectively to said third auxiliary link for feedback from actuators (228) and to said third backup link for feedback from actuators (232) via control links (230, 234).
